# EUROPÄISCHE PATENTSCHRIFT

(11) **EP 3 227 134 B1**
(45) Veröffentlichungstag und Bekanntmachung des Hinweises auf die Patenterteilung: **15.07.2020**
(21) Anmeldenummer: 15804491.7
(22) Anmeldetag: 03.12.2015
(51) Int. Cl.: B60K 11/08, B60H 1/00

(54) **LUFTREGELSYSTEM FÜR FAHRZEUGE MIT MONTAGEVERFAHREN**
AIR CONTROL SYSTEM FOR VEHICLES AND ASSEMBLY METHOD
DISPOSITIF DE RÉGULATION D'UN FLUX D'AIR POUR VÉHICULE ET PROCÉDÉ DE MONTAGE

(30) Priorität: 03.12.2014 DE 102014117817
(43) Veröffentlichungstag der Anmeldung: 11.10.2017
(73) Patentinhaber: HBPO GmbH, 59552 Lippstadt (DE)
(72) Erfinder: BRÜCKNER, Reinhold, 33442 Herzebrock-Clarholz (DE)
(74) Vertreter: Bals, Rüdiger
(86) Internationale Anmeldenummer: PCT/EP2015/078486
(87) Internationale Veröffentlichungsnummer: WO 2016/087570

(56) Entgegenhaltungen:
- EP-A1- 0 925 983
- JP-A- 2008 260 447
- US-A1- 2013 284 401
- US-B2- 6 997 240

## Beschreibung

Die Erfindung betrifft eine Vorrichtung zum Regulieren einer Luftströmung zu einer Kühlervorrichtung eines Fahrzeuges gemäß der im Oberbegriff des Anspruchs 1 näher definierten Art. Ferner bezieht sich die Erfindung auf ein Montageverfahren gemäß dem Anspruch 11.

Es ist aus dem Stand der Technik bekannt, dass in Fahrzeugen, insbesondere Kraftfahrzeugen, Frischluft durch Öffnungen des Fahrzeuges, wie z B. einen Kühlergrill, eintritt und die Luftströmung zu einer Kühlervorrichtung des Fahrzeuges geleitet wird. Hierdurch kann gewährleistet werden, dass bspw. ein Motor des Fahrzeuges effizient und zuverlässig gekühlt wird und/oder der Fahrzeuginnenraum effizient klimatisiert werden kann. Dabei kann eine Vorrichtung zur Regulation der Luftströmung eingesetzt werden, um mittels Abdeckelementen die Öffnungen des Fahrzeuges zumindest teilweise zu verschließen und damit den Lufteintritt zumindest teilweise zu verhindern. Dies bewirkt, dass bspw. ein Luftpolster reduziert, die Kaltlaufphase verkürzt und die Betriebstemperatur des Motors schneller erreicht wird. Somit kann der CO₂-Ausstoß des Fahrzeuges reduziert und der cw-Wert (Strömungswiderstandkoeffizient des Fahrzeuges) optimiert werden.

JP 2008 260447 A offenbart eine Vorrichtung zum Regulieren einer Luftströmung zu einer Kühlervorrichtung eines Fahrzeuges, wobei die Luftströmung durch zumindest eine Öffnung auf die Kühlervorrichtung leitbar ist, mit zumindest einem Abdeckelement, wobei das Abdeckelement zumindest ein Abdeckmittel zum zumindest teilweisen Verschließen der Öffnung in zumindest einer Schließstellung und zumindest ein mit dem Abdeckmittel verbundenes Lagerelement zur beweglichen Lagerung des Abdeckmittels in einer Lageraufnahme eines Trägers aufweist, wobei das Abdeckelement in einer Betriebsposition derart in dem Träger gelagert ist, dass eine Bewegung des Abdeckelementes zwischen einer Offenstellung zur zumindest teilweisen Freigabe der Öffnung und der Schließstellung durchführbar ist.

JP 2008 260447 A offenbart auch ein Montageverfahren zur Montage von zumindest einem Abdeckelement einer Vorrichtung zum Regulieren einer Luftströmung zu einer Kühlervorrichtung eines Fahrzeuges, wobei die Luftströmung durch zumindest eine Öffnung auf die Kühlervorrichtung leitbar ist, und das Abdeckelement zumindest ein Abdeckmittel zum zumindest teilweisen Verschließen der Öffnung in zumindest einer Schließstellung aufweist, wobei das Abdeckelement in einer Betriebsposition derart in einem Träger gelagert ist, dass eine Bewegung des Abdeckelementes zwischen einer Offenstellung zur zumindest teilweisen Freigabe der Öffnung und der Schließstellung durchführbar ist, wobei zumindest das Abdeckmittel in einer Montageposition umformungsfrei in den Träger montiert wird.

Nachteilhaft bei bekannten Lösungen für derartige Vorrichtungen zur Regulation der Luftströmung ist, dass diese aufwendig in der Herstellung und Montage sind. Insbesondere ist eine Montage der Abdeckelemente an dem Träger aufwendig, wobei die Abdeckelemente zur drehbaren Lagerung in einen Träger der Vorrichtung in entsprechende Lageraufnahmen eingebracht werden müssen. Dieses ist oft mit zusätzlichen Arbeitsschritten verbunden, z. B. dem Entfernen und erneuten Befestigen von Elementen des Trägers, welche das Einsetzen der Abdeckelemente ermöglichen. Häufig müssen die Abdeckelemente auch für die Montage durch Einwirkung von Kraft elastisch verbogen werden, um diese in Längsrichtung zu verkürzen, sodass eine Montage in einem geschlossenen Träger möglich ist. Hier besteht allerdings eine Gefahr für eine Beschädigung der Abdeckelemente aufgrund der Verbiegung, wobei zudem die Montage schwierig, fehleranfällig und kompliziert wird.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine vereinfachte, sichere und schnellere sowie ggf. fehlerfreie Montage zu ermöglichen.

Die voranstehende Aufgabe wird gelöst durch eine Vorrichtung mit den Merkmalen des Anspruchs 1 sowie ein Montageverfahren mit den Merkmalen des Anspruchs 11. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Vorrichtung beschrieben sind, selbstverständlich auch im Zusammenhang mit dem erfindungsgemäßen Montageverfahren, und jeweils umgekehrt, so dass bezüglich der Offenbarung zu den einzelnen Erfindungsaspekten stets wechselseitig Bezug genommen wird bzw. werden kann.

Die erfindungsgemäße Vorrichtung, insbesondere Kühlluftregulationsvorrichtung, dient zum Regulieren einer Luftströmung zu einer Kühlervorrichtung eines Fahrzeuges, insbesondere Kraftfahrzeuges, wobei die Luftströmung durch zumindest eine Öffnung auf die Kühlervorrichtung leitbar ist, mit zumindest einem Abdeckelement, insbesondere erste und zweite Abdeckelemente, wobei das Abdeckelement zumindest ein Abdeckmittel zum zumindest teilweisen Verschließen der Öffnung in zumindest einer Schließstellung und zumindest ein mit dem Abdeckmittel verbundenes, insbesondere äußeres bzw. erstes, Lagerelement zur beweglichen, insbesondere drehbaren bzw. kippbaren, Lagerung des Abdeckmittels und/oder Abdeckelementes in einer, insbesondere äußeren bzw. ersten, Lageraufnahme eines Trägers aufweist. Dabei ist das Abdeckelement in einer Betriebsposition derart in dem Träger (insbesondere drehbar) gelagert, dass eine Bewegung des Abdeckelementes zwischen einer Offenstellung zur zumindest teilweisen Freigabe der Öffnung und der Schließstellung durchführbar ist. Erfindungsgemäß ist vorgesehen, dass, insbesondere ausschließlich, in einer Montageposition das Abdeckmittel, vorzugsweise mit dem (z. B. äußeren bzw. ersten) Lagerelement, teilweise in einen Freiraum der Lageraufnahme einbringbar ist. Die Bewegung zwischen Öffnungsstellung und der Schließstellung der Abdeckelemente ist dabei bevorzugt eine Verdrehung und/oder Verkippung der Abdeckelemente um deren jeweilige Längsachse. Durch die erfindungsgemäße Lösung wird der Vorteil erzielt, dass die Montage der Abdeckelemente vereinfacht wird und insbesondere ohne eine mechanische Verbiegung oder Verformung der Abdeckelemente bzw. kraftfrei erfolgen kann. Dabei ermöglicht bspw. der Freiraum zur Aufnahme des Abdeckmittels, dass eine Einbringung des Abdeckelementes ohne eine (irgendwie geartete) Verkürzung der Abdeckelemente in Längsrichtung erfolgen kann, da ein entsprechender ausgebildeter Freiraum im Träger vorgesehen ist und als Montageraum genutzt werden kann.

Dabei dient die erfindungsgemäße Vorrichtung, insbesondere eine Kühlluftregulationsvorrichtung, insbesondere zur Kühlung eines Motors und/oder zur Klimatisierung des Fahrzeuges. Bei dem Fahrzeug kann es sich bspw. um ein Kraftfahrzeug, vorzugsweise um ein Personenkraftfahrzeug und/oder ein Lastkraftfahrzeug handeln. Zur Regulierung der Luftströmung sind zumindest zwei (nebeneinander anordbare) Abdeckelemente, insbesondere erste und zweite Abdeckelemente vorgesehen, wobei bevorzugt erste Abdeckelemente auf einer ersten (z. B. linken) Seite im Fahrzeug und zweite Abdeckelemente auf einer gegenüberliegenden Seite (z. B. rechten Seite) im Fahrzeug angeordnet sind. Insbesondere weisen sämtliche erste Abdeckelemente dieselbe horizontale bzw. axiale Ausrichtung auf. Dasselbe gilt für zweite Abdeckelemente, welche bspw. dieselbe horizontale bzw. axiale Ausrichtung aufweisen. Die Richtungsangaben beziehen sich dabei stets auf die Fahrzeugrichtungen bei der montierten Vorrichtung. So ist z. B. die Vorderseite der erfindungsgemäßen Vorrichtung in Fahrtrichtung und die Rückseite zum Fahrzeuginneren hin ausgerichtet, wenn die erfindungsgemäße Vorrichtung im Fahrzeug angeordnet bzw. eingebaut ist.

Es ist ferner denkbar, dass an jeder Seite der erfindungsgemäßen Vorrichtung jeweils ein, zwei, drei und/oder vier oder mehr Abdeckelemente vorgesehen sind, wobei die Abdeckelemente jeder Seite (d. h. jeweils erste und zweite Abdeckelemente) vorzugsweise parallel zueinander, bspw. untereinander, angeordnet sind. Es sind bspw. eine Mehrzahl erster Abdeckelemente vorgesehen, die parallel untereinander angeordnet sind, und eine Mehrzahl zweiter Abdeckelemente, die parallel untereinander angeordnet sind, wobei sämtliche erste und zweite (nebeneinander angeordnete) Abdeckelemente insbesondere in gleicher Weise und/oder gleichzeitig in die Offen- und Schließstellung bewegt werden, um in der Schließstellung die Öffnung insbesondere vollständig zu verschließen. Die Öffnung ist bspw. eine Durchtrittsöffnung für Frischluft an der Vorderseite des Fahrzeuges, z. B. ein Kühlergrill, und kann vorzugsweise den Bereich vor der erfindungsgemäßen Vorrichtung und/oder mehrere Öffnungsbereiche an der erfindungsgemäßen Vorrichtung umfassen, durch welche Luft in der Offenstellung durch die erfindungsgemäße Vorrichtung z. B. zwischen den Abdeckelementen geleitet werden kann. Dabei wird die Öffnung in der Offenstellung durch die Abdeckelemente zumindest teilweise freigegeben und in der Schließstellung die Öffnung durch die Abdeckelemente zumindest teilweise verschlossen und so der Lufteintritt zumindest teilweise verhindert. Zur Bewegung der Abdeckelemente zwischen der Schließstellung und der Offenstellung ist es erforderlich, dass sich die Abdeckelemente insbesondere gleichzeitig bewegen lassen. Hierzu ist (in der Betriebsposition) ein Mitnehmer zur Übertragung der Bewegung, insbesondere einer Drehbewegung und/oder eines Drehmoments des Antriebs vorgesehen, um die Bewegung von dem Antrieb insbesondere gleichmäßig und/oder in gleicher Weise an die Abdeckelemente, insbesondere an sämtliche Abdeckelemente der erfindungsgemäßen Vorrichtung, zu übertragen. Die Abdeckmittel können luftundurchlässig und/oder massiv z. B. als Klappen, Flügel, Lamellen und/oder als Rollo ausgebildet sein. Auch können die Abdeckmittel teilweise luftdurchlässig sein, um stets eine gewisse Zufuhr an Kühlluft zu gewährleisten.

Vorteilhafterweise kann im Rahmen der Erfindung vorgesehen sein, dass das Abdeckmittel mit dem, insbesondere ersten (bzw. äußeren), Lagerelement aus einem Stück ausgebildet ist, wobei insbesondere das Abdeckelement einstückig und/oder monolithisch (aus einem Material) ausgebildet ist. Bevorzugt ist dabei das Abdeckelement, insbesondere sämtliche Abdeckelemente der erfindungsgemäßen Vorrichtung, vorzugsweise mit dem Abdeckmittel und den äußeren bzw. ersten Lagerelementen und/oder mit sämtlichen mit dem Abdeckmittel verbundenen Lagerelementen einstückig und/oder monolithisch, z. B. als (Kunststoff-)Spritzgussteil und/oder glasfaserverstärkt ausgebildet. Hierdurch wird die Stabilität der Abdeckelemente verbessert, wobei gleichzeitig die Herstellungskosten reduziert werden können.

Auch ist es denkbar, dass der Träger und/oder die Abdeckelemente und/oder der Mitnehmer einstückig, insbesondere monolithisch, ausgebildet sind, insbesondere aus einem (Kunststoff-)Spritzgussteil und/oder glasfaserverstärkt. Hierdurch kann eine kostengünstige Herstellung der erfindungsgemäßen Vorrichtung ermöglicht werden. Dabei kann der Träger z. B. vollständig die Abdeckelemente, insbesondere die Lagerelemente, im Seitenbereich und/oder im oberen und/oder im unteren Bereich der erfindungsgemäßen Vorrichtung umschließen und lagern. Ebenfalls kann der Träger einen Mittelsteg aufweisen, welcher Lageraufnahmen für die Abdeckelemente aufweist. Der Mittelsteg und/oder ein Mitnehmer für einen Antrieb kann zudem zumindest eine Durchtrittsöffnung aufweisen, durch welche Frischluft zur Kühlung eines Antriebs eintreten kann. Dabei kann der Antrieb insbesondere unmittelbar hinter dem Mittelsteg des Trägers angeordnet sein. Es wird damit ein sicherer und zuverlässiger Betrieb des Antriebs gewährleistet und eine Überhitzung verhindert. Ferner ist es denkbar, dass das Abdeckelement, insbesondere das Abdeckmittel mit dem insbesondere äußeren bzw. ersten Lagerelement, im Wesentlichen starr ausgebildet und/oder starr im Träger montierbar ist. Insbesondere ist es vorgesehen, dass das Abdeckelement, insbesondere Abdeckmittel, mit dem äußeren bzw. ersten und/oder mit dem inneren bzw. weiteren Lagerelement im Wesentlichen starr ausgebildet und/oder starr im Träger montierbar ist. Hierdurch wird der Vorteil erzielt, dass eine kostengünstige Herstellung der Abdeckelemente möglich ist, wobei die Abdeckelemente sehr robust ausgestaltet werden können. Auch kann der Glasfaseranteil bei einem als Kunststoffteil ausgebildeten Abdeckelement erhöht werden, wodurch die Stabilität zunimmt.

Im Rahmen der Erfindung ist vorgesehen, dass die Lageraufnahme einen Freiraum und eine Einengung aufweist, wobei der Freiraum der Form des Abdeckmittels und die Einengung der Form des Lagerelementes (insbesondere geometrisch) angepasst ist, insbesondere derart, dass eine (Dreh-)Lagerung durch das Lagerelement in der Betriebsposition möglich ist. Dies ermöglicht eine einfache und sichere Montage, da keine Verbiegung / Verformung der Abdeckelemente zur Montage notwendig ist. Dabei weist die Lageraufnahme einen Freiraum auf, welcher derart ausgestaltet ist und insbesondere einen derart großen Durchmesser bzw. Schlitz aufweist, dass sowohl eine Einbringung des Lagerelementes, insbesondere eines äußeren bzw. ersten Lagerelementes, und die Einbringung des mit dem Lagerelement verbundenen Abdeckmittels möglich ist. Dagegen ist die Einengung derart ausgebildet, dass die Einbringung des Lagerelementes, insbesondere des äußeren bzw. ersten Lagerelementes, jedoch nicht des Abdeckmittels durchführbar ist. Hierzu weist die Einengung einen Durchmesser bzw. eine Aufnahme auf, welche kleiner als der Durchmesser bzw. die Ausdehnung des Abdeckmittels ist. Somit ist erfindungsgemäß die Einengung als Aufnahme des Lagerelementes, insbesondere äußeren bzw. ersten Lagerelementes, und als Anschlag für das Abdeckmittel vorgesehen. Der Freiraum kann dabei bevorzugt durch die Aufnahme gebildet sein, in welcher sich das Lagerelement in der Betriebsposition zur drehbaren Lagerung befindet. Alternativ oder zusätzlich kann der Freiraum auch durch einen äußeren Bereich der Lageraufnahme gebildet sein, welcher zur Einbringung des Abdeckmittels einen zusätzlichen Bewegungsraum bzw. Freiheitsgrad für das Abdeckelement bietet. Dabei kann vorgesehen sein, dass eine Einbringung des Abdeckmittels in den Freiraum der Lageraufnahme ausschließlich in einer bestimmten Ausrichtung des Abdeckelements, z. B. in einer im Wesentlichen 90°-Ausrichtung, durchführbar ist.

Gemäß einem weiteren Vorteil kann vorgesehen sein, dass in der Betriebsposition ein Mitnehmer zur Übertragung einer Bewegung eines Antriebs an ein erstes Abdeckelement und/oder an ein zweites Abdeckelement derart mit den Abdeckelementen lösbar verbunden ist, dass eine Überführung in die Montageposition verhindert ist. Dabei ist die Bewegung insbesondere eine Drehbewegung bzw. ein Drehmoment, welcher durch den Antrieb erzeugt wird. Neben der Übertragungsfunktion des Mitnehmers besitzt der Mitnehmer somit zusätzlich die Funktion, die Abdeckelemente in der Betriebsposition derart zu fixieren, dass eine Bewegung in die Montageposition, insbesondere durch eine laterale Bewegung verhindert ist (eine laterale Bewegung an der Vorrichtung entspricht in der Betriebsposition einer Bewegung entlang der Längsachse der Abdeckelemente). Da erste Abdeckelemente bevorzugt auf einer ersten Seite der erfindungsgemäßen Vorrichtung und zweite Abdeckelemente bevorzugt auf einer zweiten gegenüberliegenden Seite einer erfindungsgemäßen Vorrichtung angeordnet sind, können erste und zweite (nebeneinander angeordnete) Abdeckelemente durch insbesondere ausschließlich einen einzigen Mitnehmer derart verbunden werden, dass eine Bewegung der ersten Abdeckelemente in eine laterale Richtung an die zweiten Abdeckelemente durch den Mitnehmer übertragen wird und somit ebenfalls eine Bewegung der zweiten Abdeckelemente in dieselbe Richtung bewirkt wird. Da z. B. der Träger (bspw. ein Mittelsteg) mittig an der erfindungsgemäßen Vorrichtung als Anschlag dient und die laterale Bewegung begrenzt, ist somit eine laterale Verschiebung der Abdeckmittel in den Freiraum der Lageraufnahme, insbesondere äußeren bzw. ersten, Lageraufnahme verhindert. Um die Abdeckelemente erneut in eine Montageposition zu bringen, muss daher zunächst der Mitnehmer entfernt werden.

Es ist ferner denkbar, dass der Mitnehmer über zumindest ein erstes Befestigungselement direkt mit den Abdeckelementen, insbesondere kraft- und/oder formschlüssig mit einem Aufnahmeelement der Abdeckelemente, verbunden ist. Vorzugsweise kann das erste Befestigungselement über eine Rast- und/oder Clipsverbindung mit dem Aufnahmeelement verbunden werden. Insbesondere kann die Verbindung derart erfolgen, dass eine durch einen Antrieb verursachte Bewegung des Mitnehmers z. B. in eine zumindest teilweise Kreisbahn eine Drehung bzw. ein Verkippen der Abdeckelemente um die Längsachse der Abdeckelemente bewirkt. Somit können die Abdeckelemente sicher und zuverlässig durch den Mitnehmer zwischen einer Offen- und Schließstellung bewegt werden.

Vorzugsweise kann es möglich sein, dass das Abdeckelement in die Montageposition und in die Betriebsposition durch eine axiale Bewegung bringbar und/oder verschiebbar ist, wobei in der Montageposition die Lagerung in dem Träger aufgehoben ist. Dabei wird bevorzugt zur Verschiebung und/oder zur axialen Bewegung, d. h. entlang der Längsachse der Abdeckelemente, der Abdeckelemente zwischen der Montageposition und der Betriebsposition die Abdeckelemente bzw. die Abdeckmittel durch jeweils zumindest ein Lagerelement, insbesondere ein äußeres bzw. erstes Lagerelement, im Träger geführt. Ebenfalls wird die seitliche, axiale Bewegung vorzugsweise durch Stützmittel des Trägers, welche mittig am Abdeckelement angeordnet sind gestützt und/oder geführt. Dabei dienen die Stützmittel insbesondere als Auflagefläche für die Abdeckmittel der Abdeckelemente. Somit ist eine sichere und zuverlässige Überführung zwischen der Montageposition und der Betriebsposition möglich.

Vorzugsweise ist es möglich, dass der Träger und/oder das Abdeckelement und/oder das Abdeckmittel und/oder der Mitnehmer aus einem Spritzgussteil und/oder einstückig, insbesondere monolithisch, ausgebildet sind. Auch ist es denkbar, dass ein 2K-Spritzgussverfahren zur einstückigen und monolithischen Herstellung der zuvor genannten Elemente verwendet wird. Ferner ist es denkbar, dass genau ein einziger Träger und/oder ein einziger Mitnehmer für die erfindungsgemäße Vorrichtung vorgesehen sind. Auch ist es möglich, dass die erfindungsgemäße Vorrichtung zumindest teilweise, insbesondere der Mitnehmer und/oder die Abdeckelemente, aus glasfaserverstärkten Kunststoff und/oder aus einem Faserverbundwerkstoff ausgebildet sind. Hierdurch lässt sich der Herstellungsaufwand und die Stabilität der Vorrichtung deutlich erhöhen.

Vorzugsweise kann im Rahmen der Erfindung vorgesehen sein, dass das Abdeckelement beweglich, und insbesondere in der Betriebsposition ausschließlich drehbar, in der Lageraufnahme des Trägers gelagert ist, wobei insbesondere in der Betriebsposition zumindest zwei Lagerelemente des Abdeckelementes in jeweils einer Lageraufnahme des Trägers drehbar gelagert sind. Die Lageraufnahmen des Trägers können dabei als radial geschlossene Lagerführungen ausgestaltet sein. Hierdurch werden die Abdeckelemente zuverlässig (und insbesondere formschlüssig) im Träger gelagert, in einer Weise, dass eine sichere Bewegung (ohne laterale bzw. axiale Verschiebung) zwischen der Offenstellung und der Schließstellung durch eine Drehung bzw. Verkippung der Abdeckelemente möglich ist. Eine Bewegung zwischen der Offenstellung und der Schließstellung erfolgt dabei bevorzugt (ausschließlich) durch eine Drehung der Abdeckelemente um die Längsachse bzw. Drehachse. Dabei können erste Abdeckelemente z. B. parallel untereinander angeordnet sein, wobei deren Längsachse bzw. Drehachse dieselbe Richtung (bzw. Ausrichtung) aufweist. Entsprechend können zweite Abdeckelemente z. B. auf einer gegenüberliegenden Seite am Träger parallel untereinander angeordnet sein und ebenso eine Längsachse bzw. Drehachse mit derselben Ausrichtung aufweisen.

Die Lagerelemente des Abdeckelementes können jeweils mit einer entsprechenden Lageraufnahme des Trägers eine Reiblagerung bilden, so dass auf weitere Lagermittel, wie z. B. Kugellager oder dergleichen verzichtet werden kann. Zur Reduzierung der Lagerreibung kann eine Beschichtung oder eine Zwischenschicht an den Lagerelementen des Abdeckelementes und/oder der Lageraufnahme des Trägers vorgesehen sein.

Ferner ist es denkbar, dass in der Betriebsposition zumindest ein erstes, insbesondere äußeres, Lagerelement des Abdeckelementes zur beweglichen Lagerung des Abdeckmittels in einer ersten, insbesondere äußeren, Lageraufnahme und zumindest ein weiteres, insbesondere inneres, Lagerelement in einer weiteren, insbesondere inneren, Lageraufnahme des Trägers eingebracht sind. Hierdurch ist eine sichere und insbesondere vollständig geschlossene Lagerung im Träger möglich. Dabei ist bevorzugt in der Betriebsposition ausschließlich eine Drehung bzw. Verkippung der Abdeckelemente durchführbar, wobei in der Montageposition eine laterale Bewegung (d. h. insbesondere in Richtung der Achse der Lageraufnahme des Trägers) durchführbar ist.

Der bisher beschriebene Antrieb kann eine Antriebsaufnahme bevorzugt zwei Antriebsaufnahmen aufweisen, die zur Weiterleitung der Antriebsbewegung direkt an den Mitnehmer oder indirekt an das zumindest eine Verbindungselement vorgesehen sind. Idealerweise sind die beiden Antriebsaufnahmen axial gegenüber am Antrieb angeordnet und können zur rotationsfesten Aufnahme der (beiden) Verbindungselemente dienen. Die beiden Verbindungselemente (insbesondere in Form einer Kurbel) sind wiederum jeweils mit dem Mitnehmer verbunden und übertragen die vom Antrieb eingeleitete Kraft/Bewegung auf den Mitnehmer. Der Antrieb selbst sowie ggf. die Kinematik der Verbindungselemente mit dem Mitnehmer können selbsthemmend ausgestaltet sein, um eine selbstständige Verstellung der Abdeckelemente ohne Energie zu vermeiden

Um eine eindeutige Montage der Abdeckelemente im bzw. am Träger zu erzielen, können die Durchmesser der (ersten und zweiten) Lagerelemente des jeweiligen Abdeckelementes sowie der komplementär ausgestalteten Lageraufnahmen am Träger deutlich voneinander (in ihrer Größe) abweichen, wodurch eine vertauschungssichere Montage gegeben ist.

Ebenfalls Gegenstand der Erfindung ist ein Montageverfahren zur Montage von zumindest einem Abdeckelement einer Vorrichtung zum Regulieren einer Luftströmung zu einer Kühlervorrichtung eines Fahrzeuges, insbesondere eines Kraftfahrzeuges, wobei die Luftströmung durch zumindest eine Öffnung auf die Kühlervorrichtung leitbar ist, und das Abdeckelement zumindest ein Abdeckmittel zum zumindest teilweisen Verschließen der Öffnung in zumindest einer Schließstellung, und vorzugsweise ein mit dem Abdeckmittel verbundenes, insbesondere äußeres bzw. erstes, Lagerelement zur beweglichen Lagerung des Abdeckmittels in einer, insbesondere äußeren bzw. ersten, Lageraufnahme eines Trägers aufweist, wobei das Abdeckelement in einer Betriebsposition derart in einem Träger gelagert ist, dass eine Bewegung des Abdeckelements zwischen einer Offenstellung zur zumindest teilweisen Freigabe der Öffnung und der Schließstellung durchführbar ist. Dabei wird zumindest das Abdeckmittel in einer Montageposition umformungsfrei, d. h. insbesondere biegungsfrei, starr, einstückig, monolithisch und/oder formschlüssig, in den Träger montiert, bevorzugt in einer Weise, dass eine Lagerung in dem Träger und/oder Bewegung in die Betriebsposition möglich ist. Umformungsfrei bezieht sich hierbei darauf, dass eine mechanische Verformung bzw. Verkürzung in Längsrichtung, d. h. insbesondere Umformung bzw. Biegung, des Abdeckmittels (bzw. Abdeckelementes) nicht notwendig ist, um eine Montage durchzuführen. Weiter kann eine erfindungsgemäße Vorrichtung für das erfindungsgemäße Montageverfahren zum Einsatz kommen bzw. durch das erfindungsgemäße Montageverfahren montiert werden. Somit bringt das erfindungsgemäße Montageverfahren die gleichen Vorteile mit sich, wie sie ausführlich mit Bezug auf die erfindungsgemäße Vorrichtung erläutert worden sind.

Gemäß einem weiteren Vorteil kann vorgesehen sein, dass das erfindungsgemäße Montageverfahren folgende Schritte aufweist:
a) Umformungsfreies Einbringen des Abdeckelementes in den Träger, wobei ein mit dem Abdeckmittel verbundenes, insbesondere äußeres, erstes Lagerelement des Abdeckelementes in eine, vorzugsweise äußere, erste Lageraufnahme des Trägers geführt wird. Hierzu wird das Abdeckmittel bevorzugt in eine im Wesentlichen waagerechte Ausrichtung eingebracht. Das Abdeckmittel bzw. Lagerelement kann dazu z. B. von außen durch einen Freiraum in Form eines Lagerschlitz in den Träger geführt werden. Der Lagerschlitz ist z. B. als Aussparung am Träger ausgebildet.
b) Axiale Verschiebung des Abdeckelementes von der Montageposition in die Betriebsposition, wobei ein weiteres, insbesondere inneres, Lagerelement des Abdeckelementes in eine weitere, insbesondere innere, Lageraufnahme des Trägers geführt wird. Anschließend oder gleichzeitig wird insbesondere das Abdeckmittel in eine Ausrichtung überführt, die sich von der im Wesentlichen senkrechten Ausrichtung unterscheidet, insbesondere durch eine Rotation um ca. 10 - 90°, und insbesondere im Wesentlichen 90°.

Dabei ist mit dieser Ausrichtung eine Verschiebung in die Montageposition verhindert und somit ein sicherer Betrieb gewährleistet.

Ferner ist es denkbar, dass nach Schritt b) eine Anbringung eines Mitnehmers an das Abdeckelement erfolgt, wodurch eine erneute Überführung in die Montageposition verhindert wird. Der Mitnehmer wird dabei insbesondere auf einer Seite mit ersten Abdeckelementen und auf der gegenüberliegenden Seite mit zweiten Abdeckelementen in einer Weise verbunden, dass bevorzugt eine laterale Verschiebung bzw. Bewegung des ersten Abdeckelementes an das zweite Abdeckelement übertragen wird, und umgekehrt. Da vorzugsweise mittig am Träger ein Anschlag vorgesehen ist (z. B. da die Bewegung durch den lateral unbeweglich angebrachten Mitnehmer begrenzt ist), wird hierdurch die laterale Bewegung begrenzt und der Mitnehmer fixiert die Abdeckelemente in der Betriebsposition. Somit wird ein sicherer Betrieb gewährleistet.

Vorzugsweise kann vorgesehen sein, dass das Abdeckmittel zur Montage in der Montageposition in einen Freiraum einer Lageraufnahme des Trägers eingebracht wird, und insbesondere zur Überführung in die Betriebsposition aus dem Freiraum herausgeführt wird. Der Freiraum dient dabei als Montageraum, um eine Verbiegung der Abdeckmittel zu vermeiden. Allerdings ist der Freiraum vorzugsweise derart ausgebildet, dass eine Drehung des Abdeckelementes blockiert ist, wenn sich das Abdeckmittel im Freiraum zumindest teilweise befindet. Somit ist zuvor notwendig, das Abdeckmittel aus dem Freiraum zu führen, um die Abdeckelemente (durch eine Drehung) in die Betriebsposition zu bringen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich, entsprechend der Ansprüche, sein. Es zeigen:
- Figur 1a: eine Vorderansicht einer erfindungsgemäßen Vorrichtung in einer Schließstellung und Betriebsposition,
- Figur 1b: eine weitere Vorderansicht einer erfindungsgemäßen Vorrichtung in einer Offenstellung und Betriebsposition,
- Figur 2: eine weitere Vorderansicht einer erfindungsgemäßen Vorrichtung in einer Montageposition,
- Figur 3a: eine Vorderansicht eines Abdeckelementes,
- Figur 3b: eine Rückansicht eines Abdeckelementes,
- Figur 4a bis 4c: eine schematische Darstellung von Teilen einer erfindungsgemäßen Vorrichtung,
- Figur 5a und 5b: eine vergrößerte Darstellung von Teilen einer erfindungsgemäßen Vorrichtung,
- Figur 6a und 6b: eine Darstellung von Teilen einer erfindungsgemäßen Vorrichtung,
- Figur 7: eine perspektivische Rückansicht auf eine erfindungsgemäße Vorrichtung,
- Figur 8: eine weitere perspektivische Rückansicht auf die erfindungsgemäße Vorrichtung,
- Figur 9: eine perspektivische Vorderansicht von Teilen einer erfindungsgemäßen Vorrichtung,
- Figur 10: eine Draufsicht von Teilen einer erfindungsgemäßen Vorrichtung,
- Figur 11a: eine schematische Rückansicht auf eine erfindungsgemäße Vorrichtung in einer Offenstellung,
- Figur 11b: eine schematische Rückansicht auf die erfindungsgemäße Vorrichtung in einer Schließstellung,
- Figur 12: eine schematische Darstellung zur Visualisierung von Verfahrensschritten eines erfindungsgemäßen Montageverfahrens.

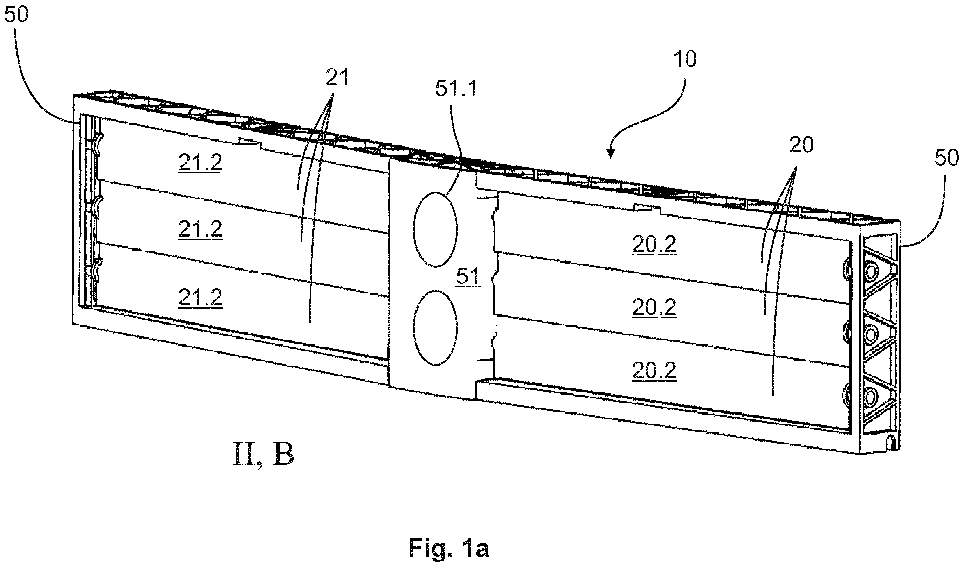

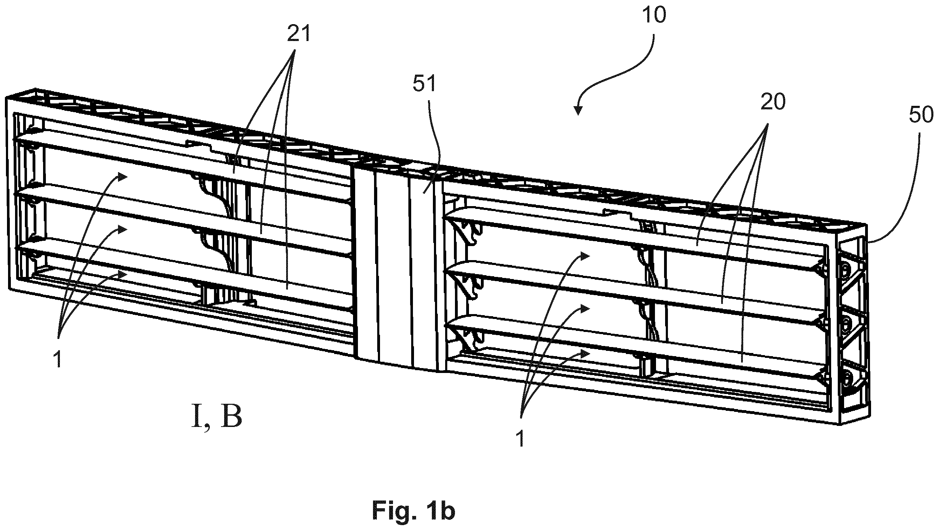

Die Figuren 1a und 1b zeigen eine Vorderansicht einer erfindungsgemäßen Vorrichtung 10, wobei in Figur 1a eine Schließstellung II dargestellt ist. Dabei ist erkennbar, dass in der Schließstellung II Abdeckelemente 20, 21 geschlossen sind und somit der Lufteintritt durch eine Öffnung 1 zumindest teilweise durch die Abdeckelemente 20, 21 verhindert wird. Die Öffnung 1 kann bspw. die in der Offenstellung I in Figur 1b dargestellten Zwischenräume der Vorrichtung 10 umfassen, sodass bei geöffneten Abdeckelementen 20, 21 die Luftströmung durch die Vorrichtung 10 geleitet werden kann. Ebenfalls ist es denkbar, dass ein Lufteintrittsbereich bzw. ein Kühlergrill des Fahrzeuges unmittelbar vor der erfindungsgemäßen Vorrichtung 10 als Öffnung 1 aufgefasst wird. Zudem kann es möglich sein, dass die Öffnung 1 unterschiedliche Öffnungsbereiche aufweist, wobei jedem Öffnungsbereich zumindest ein (und im gezeigten Ausführungsbeispiel jeweils drei) Abdeckelement/e 20, 21 zugeordnet ist. So sind in Figur 1a erste Abdeckelemente 20 (linksseitig in Fahrzeugrichtung) und zweite Abdeckelemente 21 (rechtsseitig in Fahrzeugrichtung) dargestellt, wobei jedes der Abdeckelemente 20, 21 Abdeckmittel 20.2, 21.2 aufweist. Die Abdeckmittel 20.2, 21.2 sind luftundurchlässig und z. B. starr, elastisch oder biegbar z. B. als Lamelle, Klappe oder Rollo ausgebildet, um ein luftundurchlässiges Verschließen der Öffnung 1 zu bewirken. Sämtliche Abdeckmittel 20.2, 21.2 bzw. entsprechende Abdeckelemente 20, 21 sind dabei parallel zueinander angeordnet. Die Abdeckelemente 20, 21 sind drehbar in einem Träger 50 gelagert. Somit können die Abdeckelemente 20, 21 von einer Schließstellung II, in welcher die Abdeckmittel 20.2, 21.2 die Öffnung 1 verschließen bzw. den Lufteintritt in das Fahrzeug verhindern, durch eine Drehbewegung im Träger 50 in eine Offenstellung I überführt werden, in welcher die Abdeckmittel 20.2, 21. 2 derart angeordnet bzw. gedreht sind, dass der Lufteintritt durch die Öffnung 1 ermöglicht wird. Die Offenstellung I der erfindungsgemäßen Vorrichtung 10 ist in Figur 1b dargestellt. In Figur 1a ist ferner ein Mittelsteg 51 dargestellt, welcher z. B. ein integraler Teil des Trägers 50 sein kann, wobei hinter dem Mittelsteg 51 ein Antrieb 30 angeordnet ist. Zudem kann der Mittelsteg 51 zumindest eine Kühlöffnung 51.1 für den Antrieb 30 aufweisen, um so eine ausreichende Kühlung durch Frischluft, welche durch die Kühlöffnungen 51.1 auf den Antrieb 30 geleitet wird, zu bewirken und somit einen sicheren Betrieb des Antriebs 30 zu gewährleisten. Die Vorrichtung 10 ist dabei z. B. im vorderen Bereich des Fahrzeuges, z. B. im (hinteren) Bereich eines Frontendmoduls des Fahrzeuges angeordnet. Die Vorderseite der Vorrichtung 10 ist zu dem Fahrzeugäußeren bzw. zur Fahrzeugvorderseite hin ausgerichtet, sodass bei einem Lufteintritt durch die Vorrichtung 10 die Luft in das Fahrzeuginnere geführt wird. Die folgenden Richtungsangaben an der Vorrichtung 10 entsprechen dabei stets den Fahrzeugrichtungen (z. B. ist die Vorderseite der Vorrichtung 10 in Fahrtrichtung und die Rückseite zum Fahrzeuginneren hin ausgerichtet).

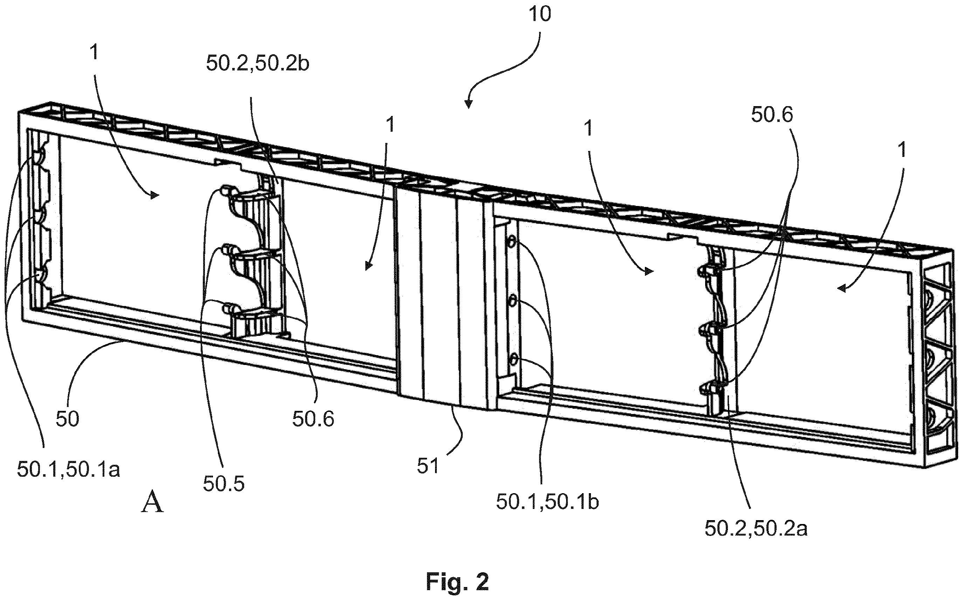

Figur 2 zeigt eine erfindungsgemäße Vorrichtung 10 in einer Montageposition A, wobei sich in der Montageposition A die Abdeckelemente 20, 21 (zumindest teilweise) außerhalb der Lagerungaufnahme des Trägers 50 befinden, z. B. vollständig entfernt. Entsprechend sind in Figur 2 die Öffnungen 1 vollständig freigegeben. Der Träger 50 weist verschiedene Lageraufnahmen 50.1 auf, in welche die Abdeckelemente 20, 21 für die Montage eingebracht werden, und in welche die Abdeckelemente 20, 21 in der Betriebsposition B drehbar gelagert sind. Gemäß einer Ausführungsvariante können am äußeren Träger 50 äußere bzw. erste Lageraufnahmen 50.1a und im mittigen Bereich der Vorrichtung 10 bzw. des Trägers 50 innere bzw. weitere Lageraufnahmen 50.1b vorgesehen sein. Diese korrespondieren zu entsprechenden Lagerelementen 20.1, 21.1, insbesondere zu äußeren bzw. ersten Lagerelementen 20.1a, 21.1a und inneren bzw. weiteren Lagerelementen 20.1b, 21.1b der Abdeckelemente 20, 21. Ferner weist der Träger 50 Stützelemente 50.2 auf, wobei ein erstes Stützelement 50.2a derart angeordnet ist, dass es ein erstes Abdeckelement 20 in der Betriebsposition B insbesondere in vertikaler Richtung mittig abstützen kann. Ein zweites Stützelement 50.2b ist derart angeordnet, dass es ein zweites Abdeckelement 21 in der Betriebsposition B mittig abstützen kann. Hierbei weisen die Stützelemente 50.2 zumindest ein Lagermittel 50.5 und zumindest ein Stützmittel 50.6 auf. Die Lagermittel 50.5 sind derart ausgebildet, dass sie kraft- und/oder formschlüssig mit mittigen Lagerelementen 20.1c, 21.1c der Abdeckelemente 20, 21 verbunden werden können und diese ggf. drehbar in der Betriebsposition B lagern. Die Stützmittel 50.6 weisen zumindest zwei Funktionen auf: in der Montageposition A dienen sie der Abstützung und Führung der Abdeckelemente 20, 21, insbesondere der Abdeckmittel 20.2, 21.2 zur Bewegung in lateraler Richtung (d. h. in Richtung der Längsachse bzw. Drehachse der Abdeckelemente 20, 21). Dabei liegen die Abdeckmittel 20.2, 21.2 auf den Stützmitteln 50.6 dann auf, wenn sich die Abdeckelemente 20, 21 in ihrer 90°-Position befinden, d. h. insbesondere in der Offenstellung I. In diesem Fall sind sie bspw. im Wesentlichen parallel zur Fahrzeugunterseite, wenn die erfindungsgemäße Vorrichtung 10 im Fahrzeug angeordnet ist. Daher können Sie in der Betriebsposition B die maximale Auslenkung der Abdeckelemente 20, 21, d. h. bei Erreichen der 90°-Stellung bzw. der Offenstellung I, begrenzen.

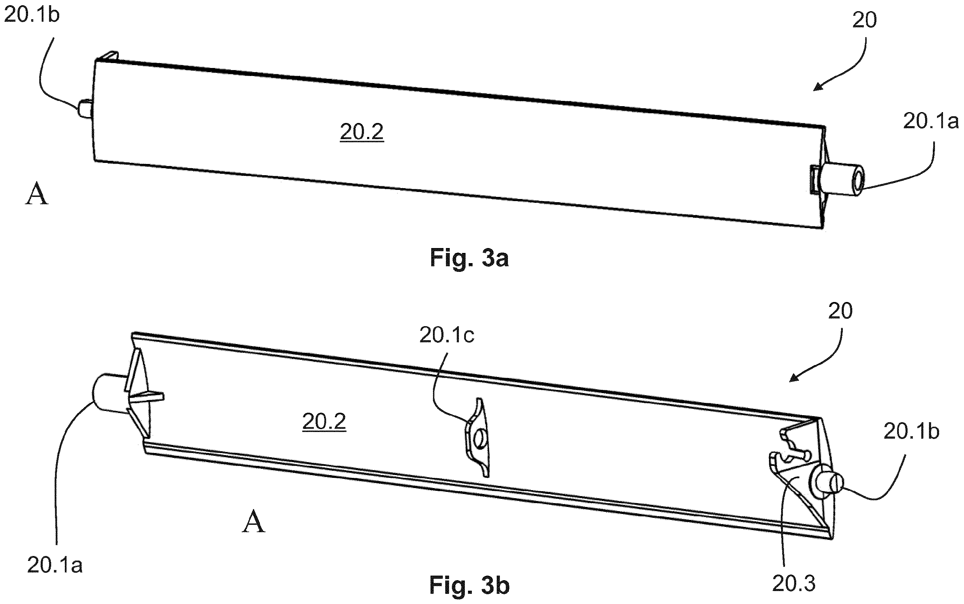

In den Figuren 3a und 3a ist beispielhaft ein Abdeckelement 20 dargestellt, wobei die folgenden Ausführungen gleichermaßen für das erste Abdeckelement 20 als auch für das zweite Abdeckelement 21 gelten. Zunächst ist in Figur 3a und 3b zu erkennen, dass ein Abdeckelement 20 (und somit auch ein nicht dargestelltes Abdeckelement 21) ein Abdeckmittel 20.2 (21.2) und zumindest ein Lagerelement 20.1 (21.1), insbesondere ein äußeres bzw. erstes Lagerelement 20.1a (21.1a) und ein inneres bzw. weiteres Lagerelement 20.1b (21.1b) aufweist. Zudem kann mittig am Abdeckmittel 20.2 (21.2) ein mittiges Lagerelement 20.1c (21.1c) vorgesehen sein. Dabei können die Lagerelemente 20.1 (21.1) eines Abdeckelements 20 (21) in ihrer Geometrie voneinander unterschiedlich ausgebildet sein. So kann bspw. ein äußeres bzw. erstes Lagerelement 20.1a (21.1a) einen Durchmesser aufweisen, welcher sich vom Durchmesser des inneren bzw. weiteren Lagerelements 20.1b (21.1b) unterscheidet. Hierdurch wird gewährleistet, dass bei einer Montage die Abdeckelemente 20, 21 fehlerfrei und eindeutig in der korrekten Ausrichtung und in die dafür vorgesehenen Lageraufnahmen 50.1 des Trägers 50 eingebracht werden können. Entsprechend ist eine äußere bzw. erste Lageraufnahme 50.1a des Trägers 50 der Ausgestaltung eines äußeren bzw. ersten Lagerelements 20.1a bzw. 21.1a angepasst und eine innere bzw. weitere Lageraufnahme 50.1b des Trägers 50 der Ausgestaltung eines inneren bzw. weiteren Lagerelements 20.1b 21.1b angepasst (z. B. in Bezug auf den Durchmesser). In Figur 3b ist zudem ein Aufnahmeelement 20.3 zu sehen, welches in der Betriebsposition B eine form- und/oder kraftschlüssige Verbindung mit einem Mitnehmer 40 ermöglicht.

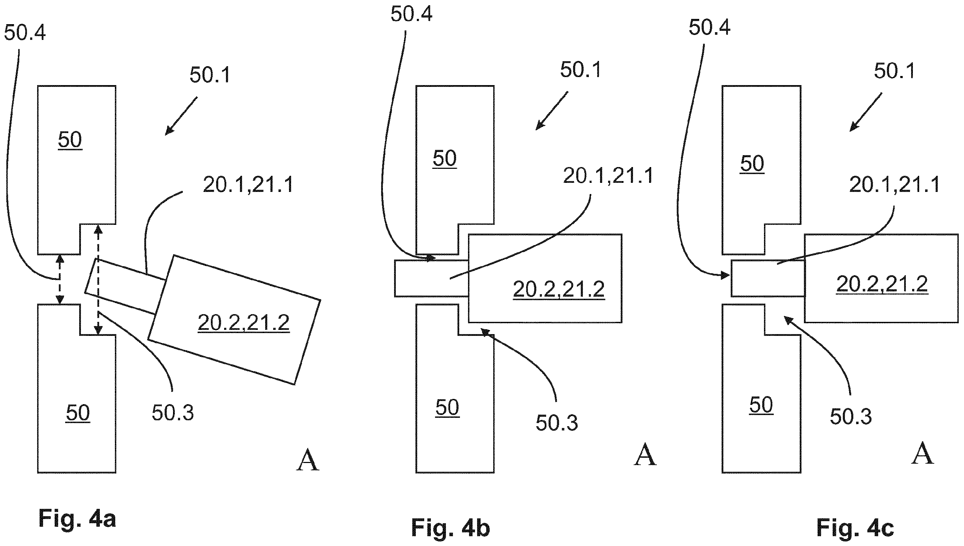

In den Figuren 4a bis 4c sind schematisch die einzelnen Montageschritte dargestellt, um die erfindungsgemäße Vorrichtung 10 von einer Montageposition A in eine Betriebsposition B zu überführen. Dabei wird in einem ersten Montageschritt, welcher in Figur 4a dargestellt ist, das Abdeckelement 20, 21 zunächst angewinkelt in den Träger 50 eingebracht. Hierbei ist zu beachten, dass dabei keine Verbiegung oder Umformung des Abdeckelements 20, 21 notwendig ist. Das Abdeckelement 20, 21 weist zumindest ein Lagerelement 20.1, 21.1 bzw. ein äußeres bzw. erstes Lagerelement 20.1a, 21.1a und ein damit verbundenes Abdeckmittel 20.2, 21.2 auf. Zunächst wird nur das Lagerelement 20.1, 21.1 des Abdeckelements 20, 21, d. h. insbesondere das äußere bzw. erste Lagerelement 20.1a, 21.1a in einer Lageraufnahme 50.1, insbesondere eine äußere bzw. erste Lageraufnahme 50.1a des Trägers 50 eingeschoben. Dabei weist die Lageraufnahme 50.1, insbesondere die äußere bzw. erste Lageraufnahme 50.1a einen Freiraum 50.3 sowie eine davon (unmittelbar) benachbarte Einengung 50.4 auf. Der Freiraum 50.3 ist derart ausgebildet, dass sowohl das Abdeckmittel 20.2, 21.2 als auch das Lagerelement 20.1, 21.1, insbesondere das äußere bzw. erste Lagerelement 20.1a, 21.1a einbringbar ist. Dagegen ist die Einengung 50.4 derart ausgestaltet, dass ausschließlich das Lagerelement 20.1, 21.1, insbesondere das äußere bzw. erste Lagerelement 20.1a, 21.1a einbringbar ist. Hierzu weist die Einengung 50.4 eine Ausdehnung bzw. einen Durchmesser auf, welcher kleiner als die Ausdehnung bzw. der Durchmesser des Teils des Abdeckmittels 20.2, 21.2 ist, welcher in den Freiraum 50.3 eingebracht wird, sodass eine Einbringung des Abdeckmittels 20.2, 21.2 in die Einengung 50.4 blockiert wird. Somit dient die Einengung 50.4 als Anschlag für das Abdeckmittel 20.2, 21.2, wie in Figur 4b zu sehen ist. Zur Montage wird das Abdeckmittel 20.2, 21.2 insbesondere vollständig in den Freiraum 50.3 der Lageraufnahme 50.1 hineingeschoben und anschließend das Abdeckelement 20, 21 derart in den Träger 50 eingeschwenkt, dass die Längsachse des Abdeckmittels 20.2, 21.2 der Dreh- bzw. Kippachse in der Betriebsposition B entspricht. Anschließend wird, wie in Figur 4c gezeigt, dass Abdeckmittel 20.1, 21.1 derart wieder aus dem Freiraum 50.3 herausgeschoben, dass sich das Abdeckmittel 20.2, 21.2 insbesondere vollständig außerhalb des Freiraums 50.3 bzw. der Lageraufnahme 50.1 insbesondere der äußeren bzw. ersten Lageraufnahme 50.1a befindet. Dabei wird ein weiteres Lagerelement 20.1, 21.1 insbesondere ein inneres bzw. weiteres Lagerelement 20.1b, 21.1b, in eine weitere Lageraufnahme 50.1, insbesondere in eine innere bzw. weitere Lageraufnahme 50.1b des Trägers 50 eingebracht. In dieser Position ist das Abdeckelement drehbar bzw. kippbar im Träger 50 gelagert und kann durch eine Rotation (z. B. um im Wesentlichen 90°) in seine Betriebsposition B gebracht werden.

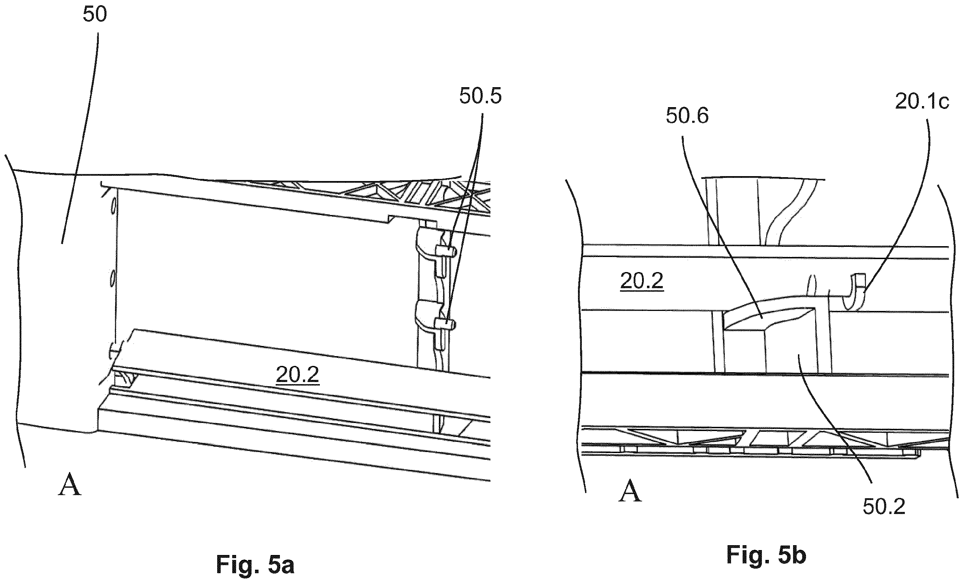

In den Figuren 5a und 5b wird die Montage der Abdeckelemente 20, 21 weiter erläutert. Wie hier zu sehen ist, sind für die erfindungsgemäße Vorrichtung 10 eine Mehrzahl erster Abdeckelemente 20 vorgesehen, welche für die Montage jeweils parallel untereinander im Träger 50 anzuordnen sind bzw. angeordnet werden. Zur vereinfachten Montage weist der Träger 50 Lagermittel 50.5 sowie Stützmittel 50.6 auf, wobei in Figur 5b deutlich zu sehen ist, dass die Stützmittel 50.6 als Auflagefläche für die Abdeckmittel 20.2, 21.2 geeignet sind und daher eine laterale Verschiebung (in Richtung der Längsachse der Abdeckelemente 20, 21) vereinfachen und führen. Durch diese Verschiebung werden zudem die Lagermittel 50.5 in an den Abdeckmitteln 20.2, 21.2 vorgesehenen mittigen (als Aufnahme ausgebildeten) Lagerelemente 20.1c, 21.1c hineingeschoben.

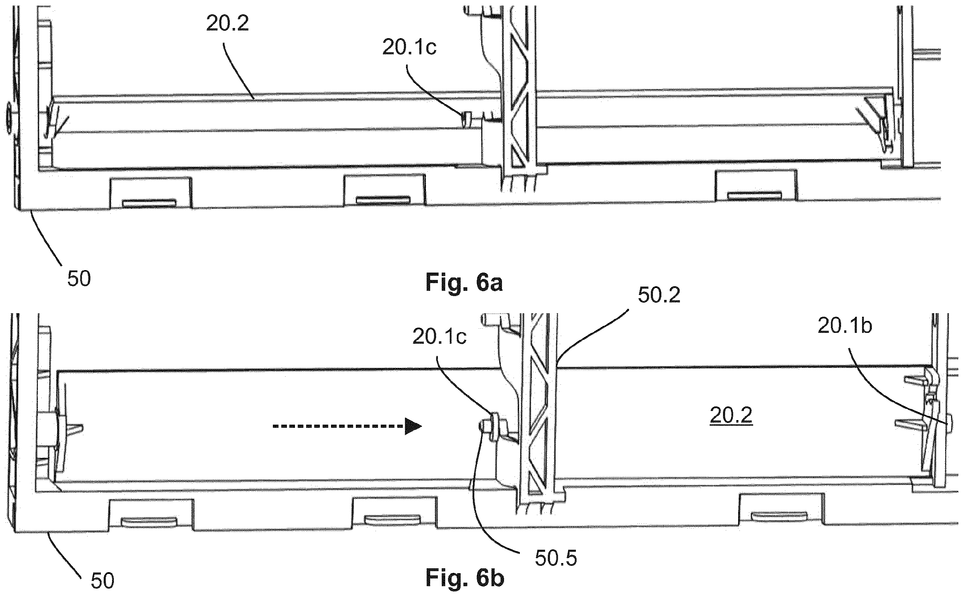

In den Figuren 6a und 6b wird die zuvor beschriebene Montage verdeutlicht, wobei ein eingebrachtes Abdeckelement 20, 21 entlang der Längsachse radial verschoben wird, wie durch einen Pfeil in Figur 6b dargestellt ist. Damit wird ein inneres bzw. weiteres Lagerelement 20.1b, 21.1b in eine entsprechende innere bzw. weitere Lageraufnahme 50.1b des Trägers 50 geschoben und ein mittiges Lagerelement 20.1c mit einem entsprechenden Lagermittel 50.5 des Trägers 50 verbunden. Dies ermöglicht eine drehbare bzw. kippbare Lagerung der Abdeckelemente 20, 21 im Träger 50.

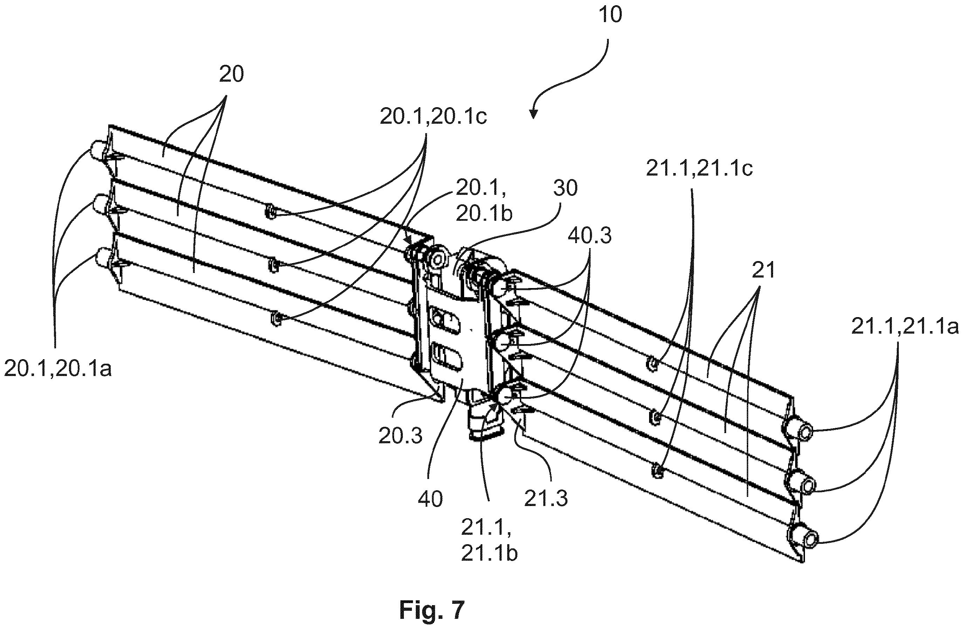

In Figur 7 ist eine perspektivische Rückansicht auf Teile einer erfindungsgemäßen Vorrichtung 10 gezeigt, wobei der Träger 50 nicht dargestellt ist. Die erfindungsgemäße Vorrichtung 10 umfasst dabei erste Abdeckelemente 20 und zweite Abdeckelemente 21, wobei Lagerelemente 20.1 der ersten Abdeckelemente 20 und Lagerelemente 21.1 der zweiten Abdeckelemente 21 dargestellt sind. Dabei ist deutlich erkennbar, dass der Mitnehmer 40 auf einer Seite mittig mit den ersten Abdeckelementen 20 (über Aufnahmeelemente 20.3) und auf einer gegenüberliegenden Seite mittig mit den Abdeckelementen 21 (über Aufnahmeelemente 21.3) verbunden ist. Eine Bewegung des Mitnehmers 40, insbesondere entlang einer (teilweisen) Kreisbahn (z. B. in einer Ebene parallel zur Fahrtrichtung), wird somit sowohl an die ersten Abdeckelemente 20 als auch an die zweiten Abdeckelemente 21 durch den Mitnehmer 40 übertragen. Gleichzeitig sind die ersten Abdeckelemente 21 untereinander über den Mitnehmer 40 und zweite Abdeckelemente 22 ebenfalls untereinander über den Mitnehmer 40 verbunden. Da die Abdeckelemente 20, 21, insbesondere die Abdeckmittel 20.2, 21.2, über Lagerelemente 20.1, 21.1 im Träger 50 drehbar gelagert sind, wird die Bewegung des Mitnehmers 40 entlang der Kreisbahn in eine Drehbewegung der Abdeckelemente 20, 21 (bzw. jeder einzelner Abdeckmittel 20.2, 21.2) im Träger 50 umgesetzt. Ein einzelnes Abdeckelement 20, 21 umfasst somit ein Abdeckmittel 20.2, 21.2 und zumindest zwei Lagerelemente 20.1, 21.1 auf jeweils gegenüberliegenden Seiten. Bspw. umfasst das einzelne erste Abdeckelement 20 ein erstes bzw. äußeres Lagerelement 20.1a und ein weiteres, inneres Lagerelement 20.1b auf der gegenüberliegenden Seite des Abdeckmittels 20.2 des Abdeckelements 20. Die Lagerelemente 20.1, 21.1 umfassen z. B. die äußeren bzw. ersten Lagerelemente 20.1a, 21.1a, mittige Lagerelemente 20.1c, 21.1c und die inneren bzw. weiteren Lagerelemente 20.1b, 21.1b. Die inneren bzw. weiteren Lagerelemente 20.1b, 21.1b dienen dabei der Verbindung und Lagerung an einer inneren bzw. weiteren Lageraufnahme 50.1b des Trägers 50. Für die Verbindung und/oder Führung der Abdeckelemente 20, 21 am Mitnehmer 40 sind ferner Aufnahmeelemente 20.3 vorgesehen, wobei Fixierelemente 40.3 des Mitnehmers 40 z. B. als Pilzköpfe ausgebildet sind und derart angeordnet sind, dass eine laterale Bewegung (d. h. nach außen) der Abdeckelemente 20, 21 weg vom Mitnehmer 40 verhindert wird. Ferner ist hinter dem Mitnehmer 40 ein Antrieb 30 angeordnet, welcher eine mechanische (Dreh-) Bewegung erzeugt, wodurch der Mitnehmer 40 mitbewegt wird und die Abdeckelemente 20, 21 für eine Bewegung zwischen der Offenstellung I und Schließstellung II angetrieben werden. Der Mitnehmer 40 weist Kühlöffnungen 40.5 auf, um eine Kühlung des Antriebs 30 zu ermöglichen.

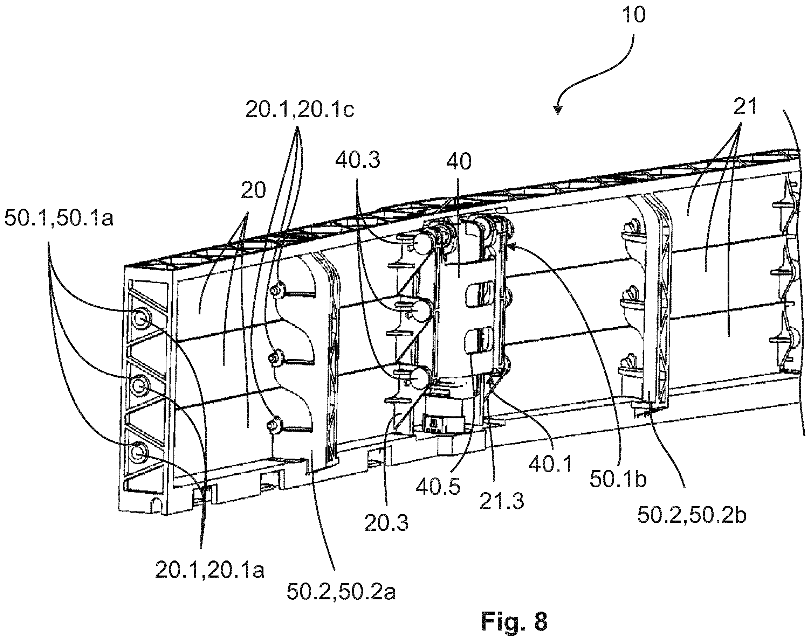

Figur 8 zeigt eine vergrößerte Darstellung der erfindungsgemäßen Vorrichtung 10 in einer Rückansicht. Die Abdeckelemente 20, 21, insbesondere die Abdeckmittel 20.2, 21.2 sind im Träger 50 drehbar gelagert. Wie bereits beschrieben, weisen hierzu die Abdeckelemente 20, 21 mit den Abdeckmitteln 20.2, 21.2 verbundene Lagerelemente 20.1, 21.1 auf. Die Lagerelemente 20.1, 21.1 können z.B. als Lagerzapfen ausgestaltet sein und korrespondieren zu entsprechenden Lageraufnahmen 50.1 des Trägers 50. Wie in Figur 8 zu sehen ist, kann dabei ein äußeres bzw. erstes Lagerelement 20.1a in einer äußeren bzw. ersten Lageraufnahme 50.1a des Trägers 50 drehbar gelagert und/oder formschlüssig verbunden sein. Entsprechendes gilt für äußere bzw. erste Lagerelemente 21.1a der zweiten Abdeckelemente 21 bzw. Abdeckmittels 21.2 und äußeren bzw. ersten Lageraufnahmen 50.1a des Trägers 50 auf der gegenüberliegenden Seite des Trägers 50. Weiter sind in Figur 8 mittige Lagerelemente 20.1c, 21.1c der Abdeckelemente 20, 21 gezeigt, welche mit den Abdeckmitteln 20.2, 21.2 verbunden sind und bspw. als Aufnahmeelement zur Lagerung eines Lagerzapfens von Stützelementen 50.2 ausgebildet sind. Dabei kann ein erstes Stützelement 50.2a und ein zweites Stützelement 50.2b zur Stützung für jeweils erste Abdeckelemente 20 und zweite Abdeckelement 21 vorgesehen und jeweils durch mittige Lagerelemente 20.1c, 21.1c der Abdeckelemente 20, 21 gelagert sein. Die Stützelemente 50.2 ermöglichen dabei eine verbesserte Lagerung der Abdeckelemente 20, 21 im Träger 50 und verhindern zudem eine Verbiegung der Abdeckelemente 20, 21 und/oder Abdeckmittel 20.2, 21.2 bei hohem Anpressdruck durch den Lufteintritt durch die Öffnung 1. Ferner sind in Figur 8 Aufnahmeelemente 20.3, 21.3 der Abdeckelemente 20, 21 zu sehen, welche eine kraft- und/oder formschlüssige Aufnahme und/oder drehbare Lagerung an ersten bzw. äußeren Befestigungselementen 40.1 des Mitnehmers 40 ermöglichen. Fixierelemente 40.3 des Mitnehmers 40 sind dabei derart angeordnet, dass eine laterale Bewegung (d. h. nach außen) der Abdeckelemente 20, 21 bzw. Abdeckmittel 20.2, 21.2 weg vom Mitnehmer 40 verhindert wird.

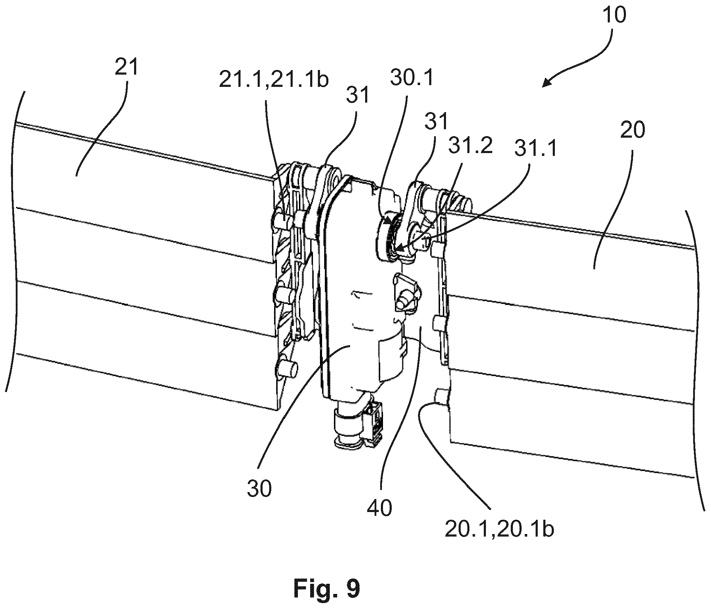

Figur 9 zeigt eine vergrößerte Ansicht von Teilen der erfindungsgemäßen Vorrichtung 10, insbesondere eines Antriebs 30, eines Mitnehmers 40 und eines Verbindungselementes 31. Der Antrieb 30 weist eine Antriebsaufnahme 30.1 auf, in welche eine Antriebswelle 31.2 des Verbindungselementes 31 eingebracht ist. Die Antriebswelle 31.2 ist z. B. drehfest, kraft- und/oder formschlüssig mit der Antriebsaufnahme 30.1 verbunden bzw. in der Antriebsaufnahme 30.1 angeordnet. Der Antrieb 30 kann bspw. selbsthemmend ausgebildet sein, sodass eine Bewegung bzw. Drehbewegung des Verbindungselementes 31 ausschließlich durch den Antrieb 30 bewirkt werden kann. Der Mitnehmer 40 ist wiederum durch ein Befestigungselement, insbesondere ein zweites Befestigungselement 40.2 mit dem Verbindungselement 31 und damit indirekt mit dem Antrieb 30 verbunden. Die Bewegung des Verbindungselementes 31 durch den Antrieb 30 führt den Mitnehmer 40 in eine Bewegung insbesondere in eine Kreisbahn. Da der Mitnehmer 40 über Befestigungselemente, insbesondere erste bzw. äußere Befestigungselemente 40.1 mit den Abdeckelementen 20, 21 verbunden ist, wird die Bewegung des Antriebs 30 an die Abdeckelemente 20, 21 übertragen. Die Abdeckelemente 20, 21 sind über Lagerelemente 20.1, 21.1 im Träger 50 drehbar gelagert, sodass ein Betrieb des Antriebs 30 eine Drehung der Abdeckelemente 20, 21 im Träger 50 bewirkt und somit ein Verkippen der Abdeckmittel 20.2, 21.2 erfolgt, wodurch eine Öffnung 1 freigegeben wird. Dabei werden in Figur 9 insbesondere die inneren bzw. weiteren Lagerelemente 20.1b, 21.1b der Abdeckelemente 20, 21 und die Lagermittel 31.1 des Verbindungselementes 31 gezeigt. Durch die Lagerelemente 20.1b, 21.1b erfolgt die Lagerung der Abdeckelemente 20, 21 im Träger 50 bzw. in einem nicht dargestellten Mittelsteg 51. Die Lagermittel 31.1 sind ebenfalls im Träger 50 bzw. im Mittelsteg 51 drehbar gelagert.

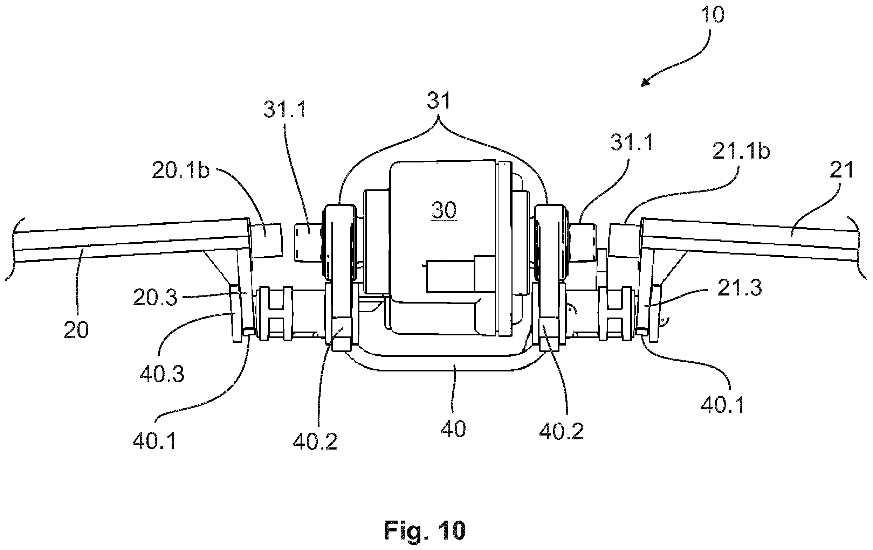

In Figur 10 ist eine Draufsicht auf Teile einer erfindungsgemäßen Vorrichtung 10 gezeigt. Dabei ist ein Antrieb 30 dargestellt, wobei ein Verbindungselement 31 durch den Antrieb 30 betrieben wird. Dabei weist der Mitnehmer 40 ein Befestigungselement, insbesondere ein zweites bzw. inneres Befestigungselement 40.2 auf, das mit dem Verbindungselement 31 verbunden ist bzw. in dem Verbindungselement 31 drehbar gelagert ist. Das zweite (bzw. innere) Befestigungselement 40.2 ist dabei im Wesentlichen parallel zur Ausrichtung des Antriebs 30 bzw. einer Antriebsaufnahme 30.1 bzw. des Lagermittels 31.1 ausgerichtet. Weiter weist der Mitnehmer 40 ein weiteres Befestigungselement, insbesondere ein erstes bzw. äußeres Befestigungselement 40.1 auf, das mit den Abdeckelementen 20, 21 verbunden bzw. in den Abdeckelementen 20, 21 (d. h. in zumindest einem Aufnahmeelement 20.3, 21.3 der Abdeckelemente 20, 21) drehbar gelagert ist. Das erste (bzw. äußere) Befestigungselement 40.1 ist dabei starr ausgebildet und/oder drehfest mit dem zweiten bzw. inneren Befestigungselement 40.2 verbunden, sodass eine Bewegung des Mitnehmers 40 gleichermaßen das zweite (innere) Befestigungselement 40.2 als auch das erste (äußere) Befestigungselement 40.1 betrifft.

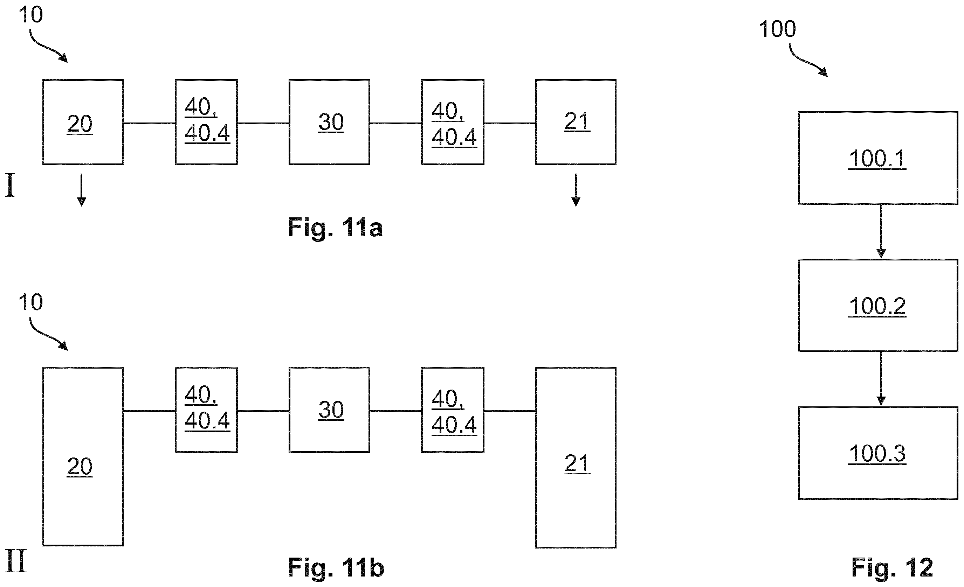

Figur 11a und Figur 11b zeigen eine schematische Rückansicht einer erfindungsgemäßen Vorrichtung 10, wobei in Figur 11a eine Offenstellung I und Figur 11b eine Schließstellung II dargestellt ist. Es ist zu sehen, dass ein Antrieb 30 mittig zwischen einem ersten Abdeckelement 20 und einem zweiten Abdeckelement 21 angeordnet ist. Die Abdeckelemente 20, 21 können dabei z. B. als Rollo ausgebildet sein. In einer Offenstellung I sind daher die Abdeckelemente 20, 21 aufgewickelt und werden durch eine Entwicklung in eine Schließstellung II gebracht. Dies wird durch die Bewegung eines Antriebs 30 erreicht, welcher z. B. eine Drehbewegung über einen Mitnehmer 40 an eine Welle (zum Aufwickeln der Rollos) der Abdeckelemente 20, 21 überträgt. Eine Drehung in eine erste Richtung bewirkt damit eine Aufwicklung und eine Drehung in eine zweite Richtung eine Entwicklung der Abdeckmittel 20.2, 21.2, die z. B. ein elastisches Material und oder ein Textil aufweisen. Um eine zuverlässige Übertragung, insbesondere eine angewinkelten Übertragung mit einem Winkelversatz zu ermöglichen, ist dabei der Mitnehmer 40 als Gelenk 40.4, insbesondere als Kardangelenk ausgebildet.

In Figur 12 sind schematisch Verfahrensschritte eines erfindungsgemäßen Montageverfahrens 100 dargestellt. Dabei wird in einem ersten Verfahrensschritt 100.1 ein Abdeckmittel 20.2, 21.2 umformungsfrei in einem Träger 50 eingebracht. In einem zweiten Verfahrensschritt 100.2 wird ein mit dem Abdeckmittel 20.2, 21.2 verbundenes Lagerelement 20.1, 21.1 in eine Lageraufnahme 50.1 des Trägers 50 geführt. Anschließend wird in einem dritten Verfahrensschritt 100.3 das Abdeckelement 20, 21 durch eine axiale Verschiebung von einer Montageposition A in eine Betriebsposition B gebracht.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung, entsprechend der Ansprüche, zu verlassen.

### Bezugszeichenliste

- 1: Öffnung

- 10: Vorrichtung, Kühlluftregulationsvorrichtung

- 20: Abdeckelement, Erste Abdeckelemente
- 20.1: Lagerelement, Lagerzapfen
- 20.1a: erstes, äußeres Lagerelement
- 20.1b: weiteres, inneres Lagerelement
- 20.1c: mittiges Lagerelement,
- 20.2: Abdeckmittel, Klappen, Lamellen
- 20.3: Aufnahmeelement für 40.1

- 21: Abdeckelement, Zweite Abdeckelemente
- 21.1: Lagerelement, Lagerzapfen
- 21.1a: erstes, äußeres Lagerelement
- 21.1b: weiteres, inneres Lagerelement
- 21.1c: mittiges Lagerelement
- 21.2: Abdeckmittel, Klappen, Lamellen
- 21.3: Aufnahmeelement für 40.1

- 30: Antrieb
- 30.1: Antriebsaufnahme

- 31: Verbindungselement, Kurbel
- 31.1: Lagermittel
- 31.2: Antriebswelle

- 40: Mitnehmer
- 40.1: erstes Befestigungselement, Befestigungszapfen
- 40.2: zweites Befestigungselement, Befestigungszapfen
- 40.3: Fixierelement für 40.1, Pilzkopf
- 40.4: Gelenk
- 40.5: Kühlöffnungen für 30

- 50: Träger
- 50.1: Lageraufnahme
- 50.1a: erste, äußere Lageraufnahme
- 50.1b: weitere, innere Lageraufnahme
- 50.2: Stützelement
- 50.2a: erstes Stützelement
- 50.2b: zweites Stützelement
- 50.3: Freiraum der Lageraufnahme
- 50.4: Einengung der Lageraufnahme
- 50.5: Lagermittel
- 50.6: Stützmittel
- 51: Mittelsteg
- 51.1: Kühlöffnungen für 30

- 100: Montageverfahren
- 100.1: Erster Verfahrensschritt
- 100.2: Zweiter Verfahrensschritt
- 100.3: Dritter Verfahrensschritt

- I: Offenstellung
- II: Schließstellung

- A: Montageposition
- B: Betriebsposition

## Patentansprüche

1. Vorrichtung (10) zum Regulieren einer Luftströmung zu einer Kühlervorrichtung eines Fahrzeuges, wobei die Luftströmung durch zumindest eine Öffnung (1) auf die Kühlervorrichtung leitbar ist, mit
zumindest einem Abdeckelement (20, 21), wobei
das Abdeckelement (20, 21) zumindest ein Abdeckmittel (20.2, 21.2) zum zumindest teilweisen Verschließen der Öffnung (1) in zumindest einer Schließstellung (II) und zumindest ein mit dem Abdeckmittel (20.2, 21.2) verbundenes Lagerelement (20.1, 21.1) zur beweglichen Lagerung des Abdeckmittels (20.2, 21.2) in einer Lageraufnahme (50.1) eines Trägers (50) aufweist, wobei das Abdeckelement (20, 21) in einer Betriebsposition (B) derart in dem Träger (50) gelagert ist, dass eine Bewegung des Abdeckelementes (20, 21) zwischen einer Offenstellung (I) zur zumindest teilweisen Freigabe der Öffnung (1) und der Schließstellung (II) durchführbar ist,
**dadurch gekennzeichnet,**
**dass** in einer Montageposition (A) das Abdeckmittel (20.2, 21.2) teilweise in einen Freiraum (50.3) der Lageraufnahme (50.1) einbringbar ist, wobei
die Lageraufnahme (50.1) eine Einengung (50.4) aufweist, wobei der Freiraum (50.3) der Form des Abdeckmittels (20.2, 21.2) und die Einengung (50.4) der Form des Lagerelementes (20.1, 21.1) angepasst ist, wobei der Freiraum (50.3) derart ausgestaltet ist, dass sowohl eine Einbringung des Lagerelementes (20.1, 21.1) und die Einbringung des mit dem Lagerelement (20.1, 21.1) verbundenen Abdeckmittels (20.2, 21.2) möglich ist, und die Einengung (50.4) derart ausgebildet ist, dass die Einbringung des Lagerelementes (20.1, 21.1) jedoch nicht des Abdeckmittels (20.2, 21.2) durchführbar ist, wobei die Einengung (50.4) als Aufnahme des Lagerelementes (20.1, 21.1) und als Anschlag für das Abdeckmittel (20.2, 21.2) vorgesehen ist.

2. Vorrichtung (10) nach Anspruch 1,
**dadurch gekennzeichnet,**
**dass** das Abdeckmittel (20.2, 21.2) mit dem Lagerelement (20.1, 21.1) aus einem Stück ausgebildet ist, wobei insbesondere das Abdeckelement (20, 21) einstückig und/oder monolithisch ausgebildet ist.

3. Vorrichtung (10) nach Anspruch 1 oder 2,
**dadurch gekennzeichnet,**
**dass** das Abdeckelement (20, 21), insbesondere das Abdeckmittel (20.2, 21.2) mit dem Lagerelement (20.1, 21.1), im Wesentlichen starr ausgebildet und/oder starr im Träger (50) montierbar ist.

4. Vorrichtung (10) nach einem der vorhergehenden Ansprüche,
**dadurch gekennzeichnet,**
**dass** die Lageraufnahme (50.1) den Freiraum (50.3) und die Einengung (50.4) aufweist, wobei der Freiraum (50.3) der Form des Abdeckmittels (20.2, 21.2) und die Einengung (50.4) der Form des Lagerelementes (20.1, 21.1) angepasst ist, derart, dass eine Lagerung durch das Lagerelement (20.1, 21.1) in der Betriebsposition (B) möglich ist.

5. Vorrichtung (10) nach einem der vorhergehenden Ansprüche,
**dadurch gekennzeichnet,**
**dass** in der Betriebsposition (B) ein Mitnehmer (40) zur Übertragung einer Bewegung eines Antriebs (30) an ein erstes Abdeckelement (20) und ein zweites Abdeckelement (21) derart mit den Abdeckelementen (20, 21) lösbar verbunden ist, dass eine Überführung in die Montageposition (A) verhindert ist.

6. Vorrichtung (10) nach Anspruch 5,
**dadurch gekennzeichnet,**
**dass** der Mitnehmer (40) über zumindest ein erstes Befestigungselement (40.1) direkt mit den Abdeckelementen (20, 21), insbesondere kraft- und/oder formschlüssig mit einem Aufnahmeelement (20.3, 21.3) der Abdeckelemente (20, 21), verbunden ist.

7. Vorrichtung (10) nach einem der vorhergehenden Ansprüche,
**dadurch gekennzeichnet,**
**dass** das Abdeckelement (20, 21) durch eine axiale Bewegung in die Montageposition (A) und in die Betriebsposition (B) bringbar und/oder verschiebbar ist, wobei in der Montageposition (A) die Lagerung in dem Träger (50) aufgehoben ist.

8. Vorrichtung (10) nach einem der vorhergehenden Ansprüche,
**dadurch gekennzeichnet,**
**dass** das Abdeckmittel (20.2, 21.2) aus einem Spritzgussteil und einstückig, insbesondere monolithisch, ausgebildet ist.

9. Vorrichtung (10) nach einem der vorhergehenden Ansprüche,
**dadurch gekennzeichnet,**
**dass** das Abdeckelement (20, 21) beweglich, und insbesondere in der Betriebsposition (B) ausschließlich drehbar, in der Lageraufnahme (50.1) des Trägers (50) gelagert ist, wobei insbesondere in der Betriebsposition (B) zumindest zwei Lagerelemente (20.1, 21.1) des Abdeckelementes (20, 21) in jeweils einer Lageraufnahme (50.1) des Trägers (50) drehbar gelagert sind.

10. Vorrichtung (10) nach einem der vorhergehenden Ansprüche,
**dadurch gekennzeichnet,**
**dass** in der Betriebsposition (B) zumindest ein erstes Lagerelement (20.1a, 21.1a) des Abdeckelementes (20, 21) zur beweglichen Lagerung des Abdeckmittels (20.2, 21.2) in einer ersten Lageraufnahme (50.1a) und zumindest ein weiteres Lagerelement (20.1b, 21.1b) in einer weiteren Lageraufnahme (50.1b) des Trägers (50) eingebracht sind.

11. Montageverfahren (100) zur Montage von zumindest einem Abdeckelement (20, 21) einer Vorrichtung (10) zum Regulieren einer Luftströmung zu einer Kühlervorrichtung eines Fahrzeuges, wobei die Luftströmung durch zumindest eine Öffnung (1) auf die Kühlervorrichtung leitbar ist, und
das Abdeckelement (20, 21) zumindest ein Abdeckmittel (20.2, 21.2) zum zumindest teilweisen Verschließen der Öffnung (1) in zumindest einer Schließstellung (II) aufweist, wobei das Abdeckelement (20, 21) in einer Betriebsposition (B) derart in einem Träger (50) gelagert ist, dass eine Bewegung des Abdeckelementes (20, 21) zwischen einer Offenstellung (I) zur zumindest teilweisen Freigabe der Öffnung (1) und der Schließstellung (II) durchführbar ist,
wobei zumindest das Abdeckmittel (20.2, 21.2) in einer Montageposition (A) umformungsfrei in den Träger (50) montiert wird,
**gekennzeichnet durch die folgenden Schritte:**
a) Umformungsfreies Einbringen des Abdeckelementes (20, 21) in den Träger (50), wobei ein mit dem Abdeckmittel (20.2, 21.2) verbundenes erstes Lagerelement (20.1a, 21.1a) des Abdeckelementes (20, 21) in eine erste Lageraufnahme (50.1a) des Trägers (50) geführt wird,
b) Axiale Verschiebung des Abdeckelementes (20, 21) entlang der Längsachse des Abdeckelementes (20, 21) von der Montageposition (A) in die Betriebsposition (B), wobei ein weiteres Lagerelement (20.1b, 21.1b) des Abdeckelementes (20, 21) in eine weitere Lageraufnahme (50.1b) des Trägers (50) geführt wird.

12. Montageverfahren (100) nach Anspruch 11,
**dadurch gekennzeichnet,**
**dass** nach Schritt b) eine Anbringung eines Mitnehmers (40) an das Abdeckelement (20, 21) erfolgt, wodurch eine erneute Überführung in die Montageposition (A) verhindert wird.

13. Montageverfahren (100) nach einem der Ansprüche 11 bis 12,
**dadurch gekennzeichnet,**
**dass** das Abdeckmittel (20.2, 21.2) zur Montage in der Montageposition (A) in einen Freiraum (50.3) einer Lageraufnahme (50.1) des Trägers (50) eingebracht wird, und insbesondere zur Überführung in die Betriebsposition (B) aus dem Freiraum (50.3) herausgeführt wird.

14. Montageverfahren (100) nach einem der Ansprüche 11 bis 13,
**dadurch gekennzeichnet,**
**dass** eine Vorrichtung (10) nach einem der Ansprüche 1 bis 10 zum Einsatz kommt.

## Claims

1. Device (10) for regulating an air flow to a radiator device of a vehicle, wherein the air flow can be directed through at least one opening (1) onto the radiator device, with at least one covering element (20, 21), wherein
the covering element (20, 21) has at least one covering means (20.2, 21.2) for at least partially closing the opening (1) in at least one closed position (II) and at least one bearing element (20.1, 21.1) connected to the covering means (20.2, 21.2) for movably mounting the covering means (20.2, 21.2) in a bearing receptacle (50.1) of a support (50), wherein the covering element (20, 21) is mounted in an operating position (B) in the support (50) in such a way that a movement of the covering element (20, 21) between an open position (I) for at least partial release of the opening (1) and the closed position (II) can be carried out,
**characterized in that**,
in an assembly position (A), the covering means (20.2, 21.2) can be inserted partially into a free space (50.3) of the bearing receptacle (50.1),
the bearing receptacle (50.1) comprising a constriction (50.4), the free space (50.3) is adapted to the shape of the covering means (20.2, 21.2) and the constriction (50.4) is adapted to the shape of the bearing element (20.1, 21.1), wherein the free space (50.3) is designed in such a way that both an insertion of the bearing element (20.1, 21.2) and an insertion of the covering means (20.2, 21.2) connected to the bearing element (20.1, 21.1) is possible, and the constriction (50.4) is designed in such a way that the insertion of the bearing element (20.1, 21.1) but not the covering means (20.2, 21.2) is possible, the constriction (50.4) being provided as a receptacle for the bearing element (20.1, 21.1) and as a stop for the covering means (20.2, 21.2).

2. Device (10) according to claim 1,
**characterized in that** the covering means (20.2, 21.2) is formed in one piece with the bearing element (20.1, 21.1), wherein in particular the covering element (20, 21) is formed in one piece and/or monolithically.

3. Device (10) according to claim 1 or 2,
**characterized in that** the covering element (20, 21), in particular the covering means (20.2, 21.2) with the bearing element (20.1, 21.1), is substantially rigidly formed and/or can be rigidly mounted in the support (50).

4. Device (10) according to one of the preceding claims,
**characterized in that** the bearing receptacle (50.1) has the free space (50.3) and the constriction (50.4), the free space (50.3) being adapted to the shape of the covering means (20.2, 21.2) and the constriction (50.4) being adapted to the shape of the bearing element (20.1, 21.1) in such a way that bearing by the bearing element (20.1, 21.1) is possible in the operating position (B).

5. Device (10) according to one of the preceding claims,
**characterized in that** in the operating position (B) a driver (40) for transmitting a movement of a drive (30) to a first covering element (20) and a second covering element (21) is detachably connected to the covering elements (20, 21) in such a way that a transfer to the assembly position (A) is prevented.

6. Device (10) according to claim 5,
**characterized in that** the driver (40) is connected directly to the covering elements (20, 21) via at least one first fastening element (40.1), in particular in a non-positive and/or positive-locking manner to a receiving element (20.3, 21.3) of the covering elements (20, 21).

7. Device (10) according to one of the preceding claims,
**characterized in that** the covering element (20, 21) can be brought and/or displaced by an axial movement into the assembly position (A) and into the operating position (B), whereby in the assembly position (A) the bearing in the support (50) is canceled.

8. Device (10) according to one of the preceding claims,
**characterized in that** the covering means (20.2, 21.2) is formed from an injection-moulded part and in one piece, in particular monolithically.

9. Device (10) according to one of the preceding claims, **characterised in that**
the covering element (20, 21) is mounted movably, and in particular in the operating position (B) exclusively rotatably, in the bearing receptacle (50.1) of the support (50), wherein in particular in the operating position (B) at least two bearing elements (20.1, 21.1) of the covering element (20, 21) are mounted rotatably in a respective bearing receptacle (50.1) of the support (50).

10. Device (10) according to one of the preceding claims, **characterised in that**
in the operating position (B) at least one first bearing element (20.1a, 21.1a) of the covering element (20, 21) for movably mounting the covering means (20.2, 21.2) in a first bearing receptacle (50.1a) and at least one further bearing element (20.1b, 21.1b) in a further bearing receptacle (50.1b) of the support (50) are inserted.

11. Assembly method (100) for mounting at least one covering element (20, 21) of a device (10) for regulating an air flow to a radiator device of a vehicle, wherein the air flow can be directed through at least one opening (1) onto the radiator device, and the covering element (20, 21) has at least one covering means (20.2, 21.2) for at least partially closing the opening (1) in at least one closed position (II), wherein the covering element (20, 21) is mounted in a support (50) in an operating position (B) in such a way that a movement of the covering element (20, 21) between an open position (I) for at least partially releasing the opening (1) and the closed position (II) can be carried out,
wherein at least the covering means (20.2, 21.2) is mounted in the support (50) in an assembly position (A) without deformation,
**characterized by** the following steps:
a) deformation-free insertion of the covering element (20, 21) into the support (50), wherein a first bearing element (20.1a, 21.1a) of the covering element (20, 21) connected to the covering means (20.2, 21.2) is guided into a first bearing receiver (50.1a) of the support (50),
b) axial displacement of the covering element (20, 21) along the longitudinal axis of the covering element (20, 21) from the assembly position (A) into the operating position (B), wherein a further bearing element (20.1b, 21.1b) of the covering element (20, 21) is guided into a further bearing receptacle (50.1b) of the support (50).

12. Assembly method (100) according to claim 11,
**characterized in that**
after step b) a driver (40) is attached to the covering element (20, 21), whereby a renewed transfer to the assembly position (A) is prevented.

13. Assembly method (100) according to one of claims 11 to 12,
**characterized in that**
the covering means (20.2, 21.2) for mounting in the assembly position (A) is inserted into a free space (50.3) of a bearing receptacle (50.1) of the support (50), and in particular for transfer into the operating position (B) is guided out of the free space (50.3).

14. Assembly method (100) according to one of claims 11 to 13,
**characterized in that**
a device (10) according to one of claims 1 to 10 is used.

## Revendications

1. Dispositif (10) pour réguler un flux d'air vers un dispositif de radiateur d'un véhicule, le flux d'air pouvant être dirigé par au moins une ouverture (1) sur le dispositif de radiateur, avec
au moins un élément de recouvrement (20, 21),
l'élément de recouvrement (20, 21) présentant au moins un moyen de recouvrement (20.2, 21.2) pour fermer au moins partiellement l'ouverture (1) dans au moins une position de fermeture (II) et au moins un élément de palier (20.1, 21.1) relié à l'élément de recouvrement (20, 21) pour le montage mobile du moyen de recouvrement (20.2, 21.2) dans un logement de palier (50.1) d'un support (50), l'élément de recouvrement (20, 21) étant monté dans une position de fonctionnement (B) dans le support (50) de telle sorte qu'un mouvement de l'élément de recouvrement (20, 21) entre une position d'ouverture (I) pour la libération au moins partielle de l'ouverture (1) et la position de fermeture (II) peut être effectué,
**caractérisé en ce que**,
dans une position de montage (A), le moyen de recouvrement (20.2, 21.2) peut être insérer partiellement dans un espace libre (50.3) du logement de palier (50.1), le logement de palier (50.1) présentant un rétrécissement (50.4), l'espace libre (50.3) est adapté à la forme du moyen de recouvrement (20.2, 21.2) et le rétrécissement (50.4) est adapté à la forme de l'élément de palier (20.1, 21.1), l'espace libre (50.3) étant conçu de telle sorte qu'il est possible d'insérer l'élément de palier (20.1, 21.2) et d'insérer le moyen de recouvrement (20.2, 21.2) reliés à l'élément de palier (20.1, 21.1), et le rétrécissement (50.4) est conçu de telle sorte que l'introduction de l'élément de palier (20.1, 21.1), mais pas le moyen de recouvrement (20.2, 21.2) est possible, le rétrécissement (50.4) étant prévu comme un réceptacle pour l'élément de palier (20.1, 21.1) et comme une butée pour le moyen de recouvrement (20.2, 21.2).

2. Dispositif (10) selon la revendication 1,
**caractérisé en ce que** le moyen de recouvrement (20.2, 21.2) est formé d'une seule pièce avec l'élément de palier (20.1, 21.1), l'élément de recouvrement (20, 21) étant en particulier formé d'une seule pièce et/ou de manière monolithique.

3. Dispositif (10) selon la revendication 1 ou 2,
**caractérisé en ce que** l'élément de recouvrement (20, 21), en particulier le moyen de recouvrement (20.2, 21.2) avec l'élément de palier (20.1, 21.1), est formé de manière essentiellement rigide et/ou peut être monté de manière rigide dans le support (50).

4. Dispositif (10) selon l'une des revendications précédentes,
**caractérisé en ce que** le logement de palier (50.1) présente l'espace libre (50.3) et le rétrécissement (50.4), l'espace libre (50.3) étant adapté à la forme de moyen de recouvrement (20.2, 21.2) et le rétrécissement (50.4) étant adapté à la forme de l'élément de palier (20.1, 21.1) de telle sorte qu'un appui par l'élément de palier (20.1, 21.1) est possible dans la position de fonctionnement (B).

5. Dispositif (10) selon l'une des revendications précédentes,
**caractérisé en ce que** dans la position de fonctionnement (B), un conducteur (40) pour transmettre un mouvement d'un entraînement (30) à un premier élément de recouvrement (20) et un deuxième élément de recouvrement (21) est relié de manière amovible aux éléments de recouvrement (20, 21) de telle sorte qu'un transfert à la position de montage (A) est empêché.

6. Dispositif (10) selon la revendication 5,
**caractérisé en ce que** le conducteur (40) est relié directement aux éléments de recouvrement (20, 21) par au moins un premier élément de fixation (40.1), en particulier par adhérence et/ou par complémentarité de forme à un élément de réception (20.3, 21.3) des éléments de recouvrement (20, 21).

7. Dispositif (10) selon l'une des revendications précédentes,
**caractérisé en ce que** l'élément de recouvrement (20, 21) peut être amené et/ou déplacé par un mouvement axial dans la position de montage (A) et dans la position de fonctionnement (B), le palier dans le support (50) étant supprimé dans la position de montage (A).

8. Dispositif (10) selon l'une des revendications précédentes,
**caractérisé en ce que** le moyen de recouvrement (20.2, 21.2) est formé d'une pièce moulée par injection et d'une seule pièce, en particulier de façon monolithique.

9. Dispositif (10) selon l'une des revendications précédentes,
**caractérisé en ce que**
l'élément de recouvrement (20, 21) est monté de manière mobile, et en particulier en position de fonctionnement (B) exclusivement de manière rotative, dans le logement de palier (50.1) du support (50), dans lequel en particulier en position de fonctionnement (B) au moins deux éléments de palier (20.1, 21.1) de l'élément de recouvrement (20, 21) sont montés de manière rotative dans un logement de palier (50.1) respectif du support (50).

10. Dispositif (10) selon l'une des revendications précédentes,
**caractérisé en ce que**
dans la position de fonctionnement (B), au moins un premier élément de palier (20.1a, 21.1a) de l'élément de recouvrement (20, 21) pour le montage mobile du moyen de recouvrement (20.2, 21.2) dans un premier logement de palier (50.1a) et au moins un autre élément de palier (20.1b, 21.1b) dans un autre logement de palier (50.1b) du support (50) sont insérés.

11. Procédé de montage (100) pour le montage d'au moins un élément de recouvrement (20, 21) d'un dispositif (10) pour la régulation d'un flux d'air vers un dispositif de radiateur d'un véhicule, dans lequel le flux d'air peut être dirigé à travers au moins une ouverture (1) sur le dispositif de radiateur, et l'élément de recouvrement (20, 21) présente au moins un moyen de recouvrement (20.2, 21.2) pour fermer au moins partiellement l'ouverture (1) dans au moins une position de fermeture (II), l'élément de recouvrement (20, 21) étant monté dans un support (50) dans une position de fonctionnement (B) de telle sorte qu'un mouvement de l'élément de recouvrement (20, 21) entre une position d'ouverture (I) pour libérer au moins partiellement l'ouverture (1) et la position de fermeture (II) peut être effectué,
dans lequel au moins le moyen de recouvrement (20.2, 21.2) est monté dans le support (50) dans une position de montage (A) sans déformation,
**caractérisé par** les étapes suivantes :
a) introduction sans déformation de l'élément de recouvrement (20, 21) dans le support (50), dans laquelle un premier élément de palier (20.1a, 21.1a) de l'élément de recouvrement (20, 21) relié au moyen de recouvrement (20.2, 21.2) est guidé dans un premier logement de palier (50.1a) du support (50),
b) déplacement axial de l'élément de recouvrement (20, 21) le long de l'axe longitudinal de l'élément de recouvrement (20, 21) de la position de montage (A) à la position de fonctionnement (B), un autre élément de palier (20.1b, 21.1b) de l'élément de recouvrement (20, 21) étant guidé dans un autre logement de palier (50.1b) du support (50).

12. Procédé de montage (100) selon la revendication 11,
**caractérisé en ce qu'**après l'étape b), un conducteur (40) est fixé à l'élément de recouvrement (20, 21), ce qui empêche un nouveau transfert vers la position de montage (A).

13. Procédé de montage (100) selon l'une des revendications 11 à 12,
**caractérisé en ce que** le moyen de recouvrement (20.2, 21.2) pour le montage dans la position de montage (A) est introduit dans un espace libre (50.3) d'un logement de palier (50.1) du support (50), et en particulier pour le transfert dans la position de fonctionnement (B) est guidé hors de l'espace libre (50.3).

14. Procédé de montage (100) selon l'une des revendications 11 à 13,
**caractérisé en ce qu'**un dispositif (10) selon l'une des revendications 1 à 10 est utilisé.
